# EUROPEAN PATENT APPLICATION

(11) **EP 3 846 523 A1**
(43) Date of publication of application: **07.07.2021**
(21) Application number: 19853757.3
(22) Date of filing: 21.08.2019
(51) Int. Cl.: H04W 16/14, H04W 16/12, H04W 72/04

(54) **COMMUNICATION CONTROL DEVICE, COMMUNICATION CONTROL METHOD AND COMMUNICATION DEVICE**

(30) Priority: 28.08.2018 JP 2018159679
(71) Applicant: Sony Corporation, 108-0075 Tokyo (JP)
(72) Inventor: FURUICHI, Sho, Tokyo 108-0075 (JP)
(74) Representative: Witte, Weller & Partner Patentanwälte mbB
(86) International application number: PCT/JP2019/032721
(87) International publication number: WO 2020/045203

(57) **Abstract**

A communication control device (40) includes an obtaining unit (441) that obtains information related to the holding of radio resources by a second-type radio system which performs radio communication using the radio waves of the frequency band used by a first-type radio system; and a deciding unit that, based on the information related to the holding of the radio resources, makes a decision about allocation of the interference margin to the second-type radio system.

## Description

### Field

The application concerned is related to a communication control device, a communication control method, and a communication device.

### Background

The issue of depletion of radio wave resources (radio resources) that are allocatable to radio systems (radio devices) has come to the surface. Since all radio wave frequency bands are occupied by existing radio systems (radio devices), newly allocating radio wave resources to a radio system is a difficult task. In that regard, in recent years, the focus has shifted to making more effective utilization of the radio wave resources based on the implementation of the cognitive radio technology. In the cognitive radio technology, the radio wave resources are squeezed out with the use of the temporal/spatial unoccupied radio waves (white space) of the existing radio systems.

### Citation List

### Patent Literature

Non Patent Literature 1: "Signaling Protocols and Procedures for Citizens Broadband Radio Service (CBRS): Spectrum Access System (SAS) - SAS Interface Technical Specification", WINNF-TS-0096.
Non Patent Literature 2: "Requirements for Commercial Operation in the U.S. 3550-3700 MHz Citizens Broadband Radio Service Band", WINNF-TS-0112.
Non Patent Literature 3: "ECC Report 186 Technical and operational requirements for the operation of white space devices under geo-location approach", January 2013.

### Summary

### Technical Problem

However, effective utilization of the radio wave resources is not always achievable by merely using the unoccupied radio waves. For example, in order to achieve effective utilization of the radio wave resources, the unoccupied radio waves need to be efficiently distributed to a plurality of radio systems (radio devices). However, efficient distribution of the unoccupied radio waves amid diverse radio systems is not an easy task.

In that regard, in the application concerned, a communication control device, a communication control method, and a communication control device are proposed that enable achieving efficient utilization of the radio wave resources.

### Solution to Problem

To solve the above problems, a communication control device according to the present disclosure includes: an obtaining unit that obtains information related to holding of radio resource by a second-type radio system which performs radio communication using radio waves of frequency band used by a first-type radio system; and a deciding unit that, based on the information related to holding of radio resource, makes a decision about allocation of interference margin to the second-type radio system.

### Brief Description of Drawings

FIG. 1 is an explanatory diagram for explaining an exemplary distribution of the interference margin to the communication devices constituting a secondary system.
FIG. 2 is a sequence diagram illustrating an example of the operations of the SAS.
FIG. 3 is an explanatory diagram illustrating the hierarchical structure in the CBRS.
FIG. 4 is an explanatory diagram illustrating the frequency bands in the CBRS.
FIG. 5 is a diagram illustrating an exemplary configuration of a communication system according to an embodiment of the application concerned.
FIG. 6 is a diagram illustrating an exemplary configuration of a communication device according to the embodiment of the application concerned.
FIG. 7 is a diagram illustrating an exemplary configuration of a terminal device according to the embodiment of the application concerned.
FIG. 8 is a diagram illustrating an exemplary configuration of a communication control device according to the embodiment of the application concerned.
FIG. 9 is an explanatory diagram illustrating an example of the interference model considered in the embodiment.
FIG. 10 is an explanatory diagram illustrating another example of the interference model considered in the present embodiment.
FIG. 11 is an explanatory diagram for explaining a primary system protection method of the interference margin wholesale distribution type.
FIG. 12 is a diagram illustrating a situation in which the interference margin is reserved in advance.
FIG. 13 is an explanatory diagram for explaining a primary system protection method of the low-interference node priority allowance type.
FIG. 14 is a sequence diagram illustrating an example of a communication control operation performed according to the embodiment of the application concerned.
FIG. 15 is an explanatory diagram for explaining the remainder interference margin in the primary system protection method of the low-interference node priority allowance type.
FIG. 16 is a diagram illustrating the definition of the frequency range.
FIG. 17 is a diagram illustrating a maximum transmission bandwidth configuration N_{RB} in FR1.
FIG. 18 is a diagram illustrating the maximum transmission bandwidth configuration N_{RB} in FR2.
FIG. 19 is a flowchart for explaining an example of a permission determination operation performed according to the embodiment of the application concerned.
FIG. 20 is a flowchart for explaining another example of the permission determination operation performed according to the embodiment of the application concerned.
FIG. 21 is a flowchart for explaining still another example of the permission determination operation performed according to the embodiment of the application concerned.
FIG. 22 is a flowchart for explaining an example of a termination operation performed according to the embodiment of the application concerned.

### Description of Embodiments

A preferred embodiment of the application concerned is described below in detail with reference to the accompanying drawings. In the embodiment described below, identical constituent elements are referred to by the same reference numerals, and the redundant explanation is not repeated.

Moreover, in the present written description and the drawings, the constituent elements having practically identical functional configuration are sometimes differentiated by adding different numbers to the same reference numeral. For example, as may be necessary, a plurality of constituent elements having practically identical functional configuration is differentiated as communication control devices 40₁, 40₂, and 40₃. However, when a plurality of constituent elements having practically identical functional configuration need not be particularly distinguished from each other, they are referred to by only the same reference numeral. For example, when the communication control devices 40₁, 40₂, and 40₃ need not be particularly distinguished from each other, they are simply referred to as communication control devices 40.

The explanation of the application concerned is given in the following sequence.
1. To begin with
2. Configuration of communication system
   2-1. Overall configuration of communication system
   2-2. Configuration of communication device 2-3. Configuration of terminal device
   2-4. Configuration of communication control device
3. Interference model
4. Primary system protection method
   4-1. Interference margin wholesale distribution type
   4-2. Low-interference node priority allowance type
   4-3. Occurrence of remainder interference margin
5. Operations of communication system
   5-1. Communication control operation
   5-2. Resource blocks
   5-3. Permission determination operation (first example)
   5-4. Permission determination operation (second example)
   5-5. Permission determination operation (third example)
6. Modification examples
   6-1. Termination operation
   6-2. Regarding application of embodiment
   6-3. Modification example related to system configuration
   6-4. Other modification examples
7. Summary

### <<1. To begin with>>

In recent years, the issue of depletion of radio wave resources (for example, frequencies) that are allocatable to radio systems (radio devices) has come to the surface. Since all radio wave frequency bands are occupied by existing radio systems (radio devices), newly allocating radio wave resources to a radio system is a difficult task. In that regard, in recent years, the focus has shifted to making more effective utilization of the radio wave resources based on the implementation of the cognitive radio technology.

In the cognitive radio technology, the radio wave resources are squeezed out with the use of the temporal/spatial unoccupied radio waves (white space) of the existing radio systems (for example, dynamic frequency sharing (DSA: Dynamic Spectrum Access)). For example, in the United States of America, with the aim of opening to the public the Federal use band (3.55 GHz to 3.70 GHz) that overlaps with the frequency band known worldwide as the 3GPP band 42, 43; legalization/standardization of the CBRS (Citizens Broadband Radio Service) that utilizes the frequency sharing technology is being accelerated.

Meanwhile, the cognitive radio technology not only contributes in the dynamic frequency sharing but also contributes in the enhancement of the frequency usage efficiency of the radio systems. For example, in the ETSI EN 303 387 or the IEEE 801.19.1-2014, a coexistence technology among the radio systems using the unoccupied radio waves is defined.

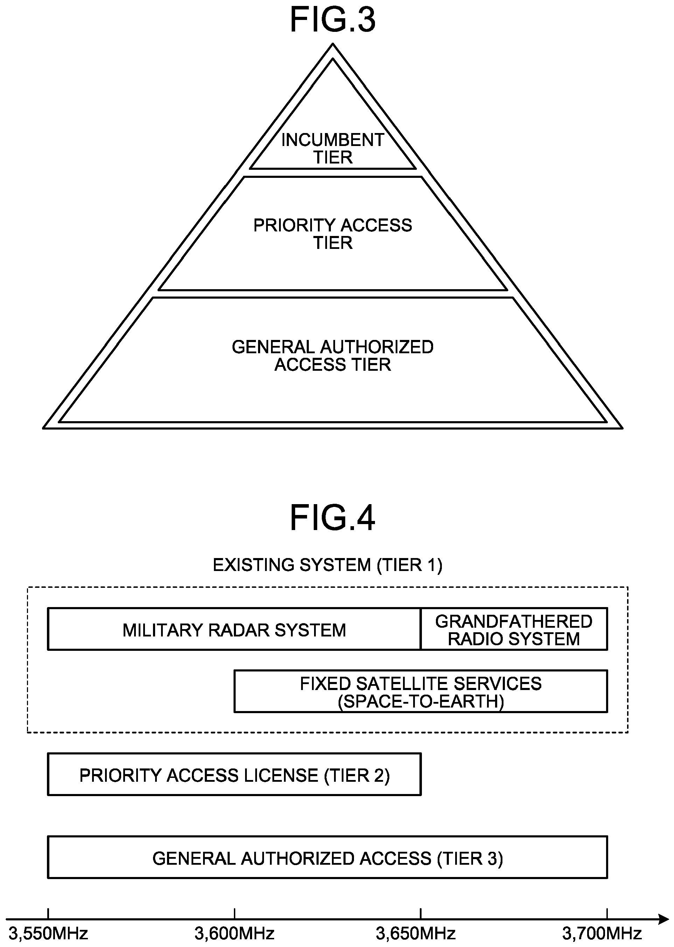

In order to implement frequency sharing, it is important that communication control devices (for example, frequency management databases) control the communication of secondary systems in such a way that there is no fatal interference in primary systems. A communication control device is a device for managing the communication of communication devices. For example, a communication control device is a device (system), such as the GLDB (Geo-location Database) or the SAS (Spectrum Access System), that manages the radio wave resources (for example, frequencies). In the present embodiment, the communication control devices correspond to the communication control devices 40 (for example, the communication control devices 40₁ and 40₂ illustrated in FIG. 4) (described later). Regarding the communication control devices 40, the detailed explanation is given later.

Herein, a primary system implies, for example, a system (for example, an existing system) that uses the radio waves of predetermined frequency bands with priority over other systems such as secondary systems. A secondary system implies, for example, a system that makes secondary use (for example, performs dynamic frequency sharing) of the radio waves of the frequency bands used by a primary system. A primary system as well as a secondary system can be configured in a plurality of communication devices or can be configured in a single communication device. A communication control device distributes the interference allowance (also called the interference margin) among one or more communication devices in such a way that the interference aggregation of one or more communication devices constituting the secondary system does not exceed the interference allowance of the primary system. The interference allowance can be the interference amount set in advance by the operator of the primary system or by the official organization for managing the radio waves. In the following explanation, when the term "interference margin" is written, it implies the interference allowance. Moreover, the interference aggregation is sometimes called the aggregated caused-interference power.

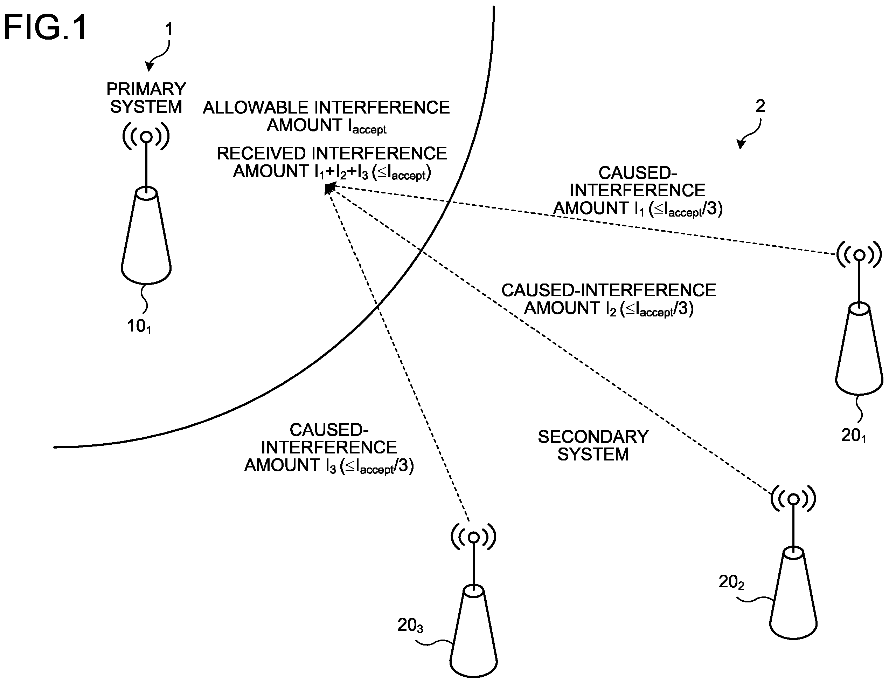

FIG. 1 is an explanatory diagram for explaining an exemplary distribution of the interference margin to the communication devices constituting a secondary system. In the example illustrated in FIG. 1, a communication system 1 represents the primary system, and a communication system 2 represents the secondary system. The communication system 1 includes a communication device 10₁. The communication system 2 includes communication devices 20₁, 20₂, and 20₃. Meanwhile, in the example illustrated in FIG. 1, although the communication system 1 includes only a single communication device 10, there can be a plurality of communication devices 10 in the communication system 1. Moreover, in the example illustrated in FIG. 1, although the communication system 2 includes three communication devices 20, there can be less than three communication devices 20 or more than three communication devices 20 in the communication system 2. Furthermore, in the example illustrated in FIG. 1, although there is only one primary system (in the example illustrated in FIG. 1, the communication system 1) and only one secondary system (in the example illustrated in FIG. 1, the communication system 2), there can be more than one primary systems and more than one secondary systems.

Each of the communication devices 10₁, 20₁, 20₂, and 20₃ is capable of transmitting and receiving radio waves. Herein, I_{accept} represents the amount of interference acceptable to the communication device 10₁. Moreover, I₁, I₂, and I₃ represent the amounts of interference caused by the communication devices 20₁, 20₂, and 20₃, respectively, at a predetermined protection point of the communication system 1 (the primary system). Herein, the protection point represents the interference calculation reference point meant to be used in protecting the communication system 1.

The communication control device distributes the interference margin I_{accept} to a plurality of communication devices 20 in such a way that the aggregation of the interference at the predetermined protection point of the communication system 1 (i.e., a received interference amount I₁+I₂+I₃ illustrated in FIG. 1) does not exceed the interference margin I_{accept}. For example, the communication control device distributes the interference margin I_{accept} to the communication devices 20 in such a way that each of the caused-interference amounts I₁, I₂, and I₃ becomes equal to I_{accept/}3. Alternatively, the communication control device distributes the interference margin I_{accept} to the communication devices 20 in such a way that each of the caused-interference amounts I₁, I₂, and I₃ becomes smaller than I_{accept}/3. Of course, the interference margin distribution method is not limited to the examples given above.

Based on the distributed amount of interference (hereinafter, called the distributed interference amount), the communication control device calculates the maximum transmission power allowed to each communication device 20 (hereinafter, called the maximum allowable transmission power). For example, the communication control device performs back calculation from the distributed interference amount based on the propagation loss and the antenna gain, and calculates the maximum allowable transmission power for each communication device 20. Then, the communication control device notifies each communication device 20 about the information on the calculated maximum allowable transmission power.

Meanwhile, in the WinnFourum (Wireless Innovation Forum), regarding the SAS, the standard related to information exchange among a plurality of SASs is laid down. The SAS is, for example, the frequency administration database called SAS-SAS Protocol in the CBRS (refer to Non Patent Literature 1). In that standard, a full activity dump message is mentioned, and a method is provided for dumping the minimum required information recorded in the database for the purpose of interference control, and achieving synchronization. Explained below is an example of the information required in interference control.

(1) CBSD Data Record
   - base station installation position information
   - operation parameters (frequency, transmission power)
(2) Zone Data Record
   •PPA (PAL Protection Area, the protection area in a secondary-use system having high priority)
(3) ESC Sensor Record
   •installation position information of sensors meant for detecting carrier-based radar signals

Meanwhile, it is also possible to think of performing real time management by appropriately exchanging individual sets of information. However, since the real time management results in a significant load, it is considered that the same messages are periodically exchanged (for example, once a day) so as to reduce the operational load on the database. For example, in the case of exchanging the messages once a day, the communication control device performs primary system protection calculation once a day. In that case, when the calculation period arrives, all the calculations causing a load can be performed in a focused manner. Hence, for example, during that period, if a new operation permission request is received from a communication device, it is considered that the operation permission is arbitrarily withheld and, after the post-synchronization calculation is performed, the operation permission is granted.

However, in such a manner of implementation, regarding the user of a communication device who wishes to start the operations regardless of the fact that there would be some impact of interference, he or she needs to wait for a while till the operation permission is granted (for example, if the protection calculation is performed once a day, the user needs to wait for one day). That makes such database operations inconvenient. Moreover, if the operations of a plurality of communication devices 20 are withheld, the post-synchronization interference control calculation may become complex. For that reason, there may be a situation in which the operation permission is promptly granted to particular communication devices. On the other hand, in the interference control, it is important to ensure that the aggregation of the interference from a plurality of communication devices does not exceed the allowable value of the primary system.

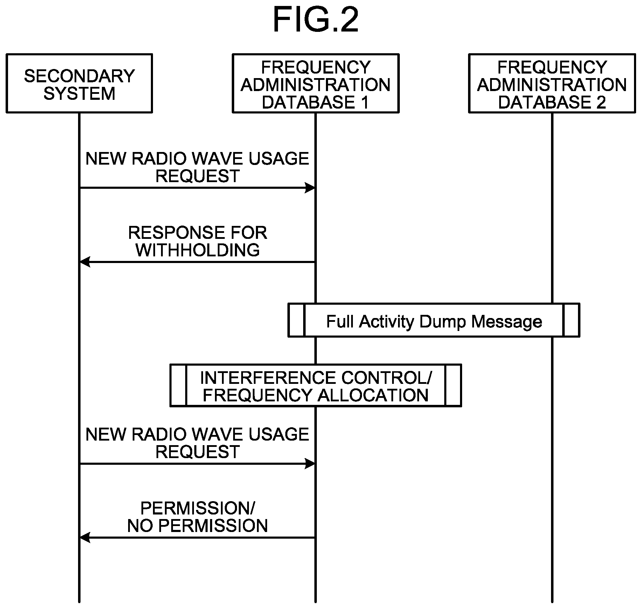

FIG. 2 is a sequence diagram illustrating an example of operating the SAS. When a secondary system issues a request during daytime hours for newly starting operations, it is assumed that the database needs to determine whether that secondary system should to be withheld or whether the operation permission can be immediately granted. However, no such determination criteria have been disclosed till now.

Meanwhile, depending on the secondary system, it is assumed that the stock of the allocated frequencies is different. From the perspective of impartiality, as far as possible, it is desirable to ensure that all secondary systems secure the stock at an equivalent standard. If the radio wave resources are disproportionately allocated to only some secondary systems, then there may be a situation in which the other secondary systems cannot use the radio wave resources. Under such circumstances, it is not possible to ensure efficient use of the radio wave resources. For that reason, at the time of determining about the operation permission, the communication control device desirably ensures that the secondary systems are able to secure the stock at an equivalent level.

In the present embodiment, the communication control device uses the radio waves of the frequency bands used by the primary system, and obtains information related to the holding of the radio resources by the secondary systems that perform radio communication. Then, based on the information related to the holding of the radio resources, the communication control device makes a decision related to the allocation of the interference margin to the secondary systems.

That enables maintaining the impartiality regarding the allocation of the interference margin among the secondary systems. As a result, there is a decrease in the occurrences of disproportionate allocation of the radio resources to particular secondary systems. Hence, fewer secondary systems face the issue of not being able to use the radio resources at all, thereby enabling efficient use of the radio resources.

Meanwhile, in the present embodiment, the primary system (the communication system 1) and the secondary system (the communication system 2) are present in a frequency sharing environment. Herein, the explanation is given with reference to the CBRS that is legislated by the FCC (Federal Communications Commission) of the United States of America. FIG. 3 is an explanatory diagram illustrating the hierarchical structure in the CBRS. In the CBRS, a hierarchical structure is defined that is configured with the following: an incumbent tier, a priority access tier, and a general authorized access tier. In that hierarchical structure, the priority access tier is positioned at a higher level than the general authorized access tier, and the incumber tier is positioned at a higher level than the priority access tier. With reference to the CBRS, the systems located in the incumbent layer (the existing systems) represent the primary systems, and the systems located in the general authorized access tier and the priority access tier represent the secondary systems.

FIG. 4 is an explanatory diagram illustrating the frequency bands in the CBRS. With reference to the example of the CBRS given above, the primary systems include military radar systems, grandfathered radio systems, or fixed satellite services (space-to-earth). Herein, the military radar systems are carrier-based radars. Meanwhile, a secondary system is a radio system called a CBSD (Citizens Broadband Ratio Service Device). The secondary systems further have priority assigned thereto, and either a priority access license (PAL) enabling licensed use of the shared band frequencies is set or a general authorized access (GAA) not requiring a license is set. In FIG. 4, a tier 1 corresponds to the incumbent tier illustrated in FIG. 3. Moreover, in FIG. 4, a tier 2 corresponds to the priority access tier illustrated in FIG. 3. Furthermore, in FIG. 4, a tier 3 corresponds to the general authorized access tier.

Meanwhile, the primary system (the communication system 1) according to the present embodiment is not limited to the example illustrated in FIG. 1. That is, some other type of radio system can also be treated as the primary system (the communication system 1). For example, the primary system can be a television broadcasting system such as the DVB-T (Digital Video Broadcasting-Terrestrial) system. Alternatively, the primary system can be a cellular communication system such as the LTE (Long Term Evolution) or the NR (New Radio). Still alternatively, the primary system can be an aeronautical radio system such as the ARNS (Aeronautical Radio Navigation Service). Of course, the primary system is not limited to such radio systems, and can be some other type of radio system.

Meanwhile, the unoccupied radio waves (the white space) used by the communication system 2 are not limited to the radio waves of the Federal use band (3.55 GHz to 3.70 GHz). That is, as the unoccupied radio waves, the communication system 2 can use the radio waves having a different frequency band than the Federal use band (3.55 GHz to 3.70 GHz). For example, if the primary system (the communication system 1) is a television broadcasting system, then the communication system 2 can be a system in which the TV white space is used as the unoccupied radio waves. The TV white space implies such frequency bands, from among the frequency channels allocated to the television broadcasting system (the primary system), that are used not used by the television broadcasting system. The TV white space can be the channels not in use depending on the region.

The relationship between the communication system 1 and the communication system 2 is not limited to the frequency sharing relationship in which the communication system 1 represents the primary system and the communication system 2 represents the secondary system. That is, the relationship between the communication system 1 and the communication system 2 can be a network coexistence relationship among identical or different radio systems that use the same frequencies.

In the following explanation, the term "frequency" can be substituted with some other term. For example, the term "frequency" can be substituted with a term such as "resource", "resource block", "resource element", "channel", "component carrier", "carrier", or "subcarrier"; or can be substituted with terms having similar meanings.

### <<2. Configuration of communication system>>

Given below is the explanation of the communication system 2 according to the embodiment of the application concerned. The communication system 2 is a radio communication system that performs radio communication by making secondary use of the radio waves used by the communication system 1 (a first-type radio system). For example, the communication system 2 is a radio communication system that performs dynamic frequency sharing of the unoccupied radio waves of the communication system 1. The communication system 2 uses a predetermined radio access technology and provides radio services to the users or the devices of the users.

The communication system 2 can be a cellular communication system such as the W-CDMA (Wideband Code Division Multiple Access), the cdma2000 (Code Division Multiple Access 2000), the LTE, or the NR. In the following explanation, it is assumed that the "LTE" includes the LTE-A (LTE-Advanced), the LTE-A Pro (LTE-Advanced Pro), and the EUTRA (Evolved Universal Terrestrial Radio Access). Moreover, it is assumed that the "NR" includes the NRAT (New Radio Access Technology) and the FEUTRA (Further EUTRA). Meanwhile, the communication system 2 is not limited to a cellular communication system. Alternatively, for example, the communication system 2 can be some other radio communication system such as a wireless LAN (Local Area Network) system, a television broadcasting system, an aeronautical radio system, or a space radio communication system.

In the present embodiment, the communication system 1 represents the primary system, and the communication system 2 represents the secondary system. As explained earlier, there can be a plurality of communication systems 1 and a plurality of communication systems 2. In the example illustrated in FIG. 1, the communication system 1 is configured with a single communication device (the communication device 10₁ illustrated in FIG. 1). However, the communication system 1 can be configured with a plurality of communication devices 10. The configuration of the communication devices 10 can be same as the configuration of the communication devices 20 (described later) or terminal devices 30 (described later).

### <2.1. Overall configuration of communication system>

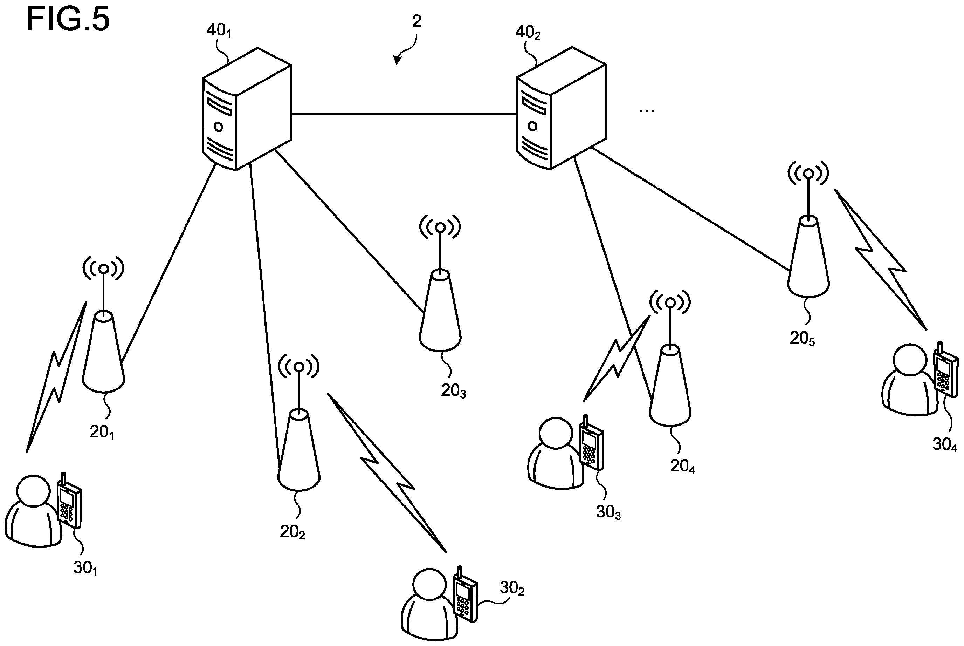

FIG. 5 is a diagram illustrating an exemplary configuration of the communication system 2 according to the embodiment of the application concerned. The communication system 2 includes the communication devices 20, the terminal devices 30, and the communication control devices 40. In the communication system 2, the constituent radio communication devices operate in coordination, so that the communication system 2 provides radio services to the users or the devices of the users. The radio communication devices are the devices having the radio communication function. In the example illustrated in FIG. 5, the communication devices 20 and the terminal devices 30 correspond to radio communication devices. Meanwhile, the communication control devices 40 can also have the radio communication function. In that case, the communication control devices 40 too can be treated as radio communication devices. In the following explanation, the radio communication devices are sometimes simply referred to as communication devices.

The communication system 2 can include a plurality of communication devices 20, a plurality of terminal devices 30, and a plurality of communication control devices 40. In the example illustrated in FIG. 5, the communication system 1 includes communication devices 20₁, 20₂, 20₃, 20₄, and 20₅ as the communication devices 20. Moreover, the communication system includes terminal devices 30₁, 30₂, 30₃, and 30₄ as the terminal devices 30. Furthermore, the communication system 1 includes the communication control devices 40₁ and 40₂ as the communication control devices 40.

In the following explanation, the communication devices (the radio communication devices) are sometimes called radio systems. For example, the communication device 10 and the communication devices 20₁ to 20₅ represent individual radio systems. Similarly, the terminal devices 30₁ and 30₂ represent individual radio systems. Alternatively, a radio system can be a single system configured with a plurality of radio communication devices. For example, a system configured with one or more communication devices 20 and one or more terminal devices 30, which are subordinate devices of the communication devices 20, can be treated as a single radio system. Still alternatively, the communication system 1 as well as the communication system 2 can be treated as a single radio system. In the following explanation, a communication system configured with a plurality radio communication devices is sometimes called a radio communication system or simply a communication system.

Each communication device 20 (a second-type radio system) is a radio communication device that performs radio communication with the terminal devices 30 or the other communication devices 20. For example, the communication devices 20 represent base stations (also called base station devices) of the radio communication system. The radio access technology implemented in the communication devices 20 either can be the cellular communication technology or can be the wireless LAN technology. Of course, the radio access technology implemented in the communication device 20 is not limited to such examples, and some other radio access technology can also be implemented.

As far as the coverage is concerned, the communication devices 20 either can have a wide coverage such as in the case of macro cells or can have a narrow coverage such as in the case of pico cells. Of course, the coverage of the communication devices 20 can be extremely narrow such as in the case of femto cells. Moreover, if the communication devices 20 have the beam forming capability, the cells and the service areas can be formed on a beam-by-beam basis.

The communication devices 20 can be installed and/or operated by a single business operator, or can be installed and/or operated by a single individual person. Of course, the agents for installation/operation of the communication devices 20 are not limited to those examples. For example, the communication devices 20 can be installed/operated by a plurality of business operators or a plurality of individual persons on a conjoint basis. Alternatively, the communication devices 20 can be common utility used by a plurality of business operators or a plurality of individual persons. In that case, the installation and/or the operation of the equipment can be performed by a third party different than the users.

Meanwhile, the concept of a base station includes an access point and a radio relay station (also called a relay device). Moreover, the concept of a base station not only includes a structure equipped with the functions of a base station, but also includes a device installed in a structure. Examples of the structure include a building such as an office building, a house, a steel tower, a railway station facility, an airport facility, a port facility, or a stadium. However, the concept of a structure not only includes a building, but also includes a non-building structure such as a tunnel, a bridge, a dam, a wall, or a steel pole; or includes a facility such as a crane, a gate, or a windmill. Furthermore, the concept of a structure not only includes a structure on land (above ground) or a structure in the ground, but also includes a structure on the water, such as a pier or a mega-float, or an underwater structure such as a maritime observation facility.

A base station can be a base station configured to have portability (i.e., can be a mobile station). In that case, the base station (the mobile station) can be a radio communication device installed on a mobile object, or can be a mobile object itself. The mobile object can be a mobile object moving on land (above ground) (for example, a vehicle such as an automobile, a bus, a truck, a motorcycle, a railway train, or a magnetic levitation train); or can be a mobile object moving underground (for example, through a tunnel) (such as underground railway). Of course, the mobile object can be a mobile terminal such as a smartphone. Alternatively, the mobile object can be a mobile object moving on water (for example, a ship such as a passenger ship, a freight vessel, or a hovercraft); or can be a mobile object moving underwater (for example, a submarine ship such as a submersible vessel, or an underwater craft, or an unmanned underwater vehicle). Still alternatively, the mobile object can be a mobile object moving within the atmosphere (for example, an aircraft such as an airplane, an airship, or a drone); or can be a mobile object that moves in the outer space (for example, an artificial celestial body such as an artificial satellite, a spacecraft, a space station, or a probe vehicle).

Each terminal device 30 is a communication device equipped with the communication function. Examples of the terminal device 30 include a cellular phone, a smart device (a smartphone or a tablet), a PDA (Personal Digital Assistant), or a personal computer. Alternatively, the terminal device 30 can be a device other than a user terminal, such as a sensor installed in factory machines or buildings. For example, the terminal device 30 can be an M2M (Machine to Machine) device or an IoT (Internet of Things) device. Still alternatively, the terminal device 30 can be a device equipped with the relay communication function, as represented by D2D (Device to Device). Still alternatively, the terminal device 30 can be a device called CPE (Client Premises Equipment) that is used in radio backhauling. Meanwhile, the terminal device 30 can be a radio communication device installed in a mobile object, or can be a mobile object itself.

Each communication control device 40 is a device that controls the radio communication of the communication devices 20. For example, the communication control device 40 is a device that decides on the operation parameters to be used by the communication devices 20, and issues instructions to the communication devices 20. In that case, the communication control device 40 can be a network manager that performs integrated control of the radio communication within the network. With reference to the ETSI EN 303 387 or the IEEE 802.19.1-2014, the communication control device 40 can be a control device such as a spectrum manager/coexistence manager that performs radio wave interference control among radio devices. Meanwhile, in a frequency sharing environment, a database (a database server, a device, or a system) such as the GLDB (Geolocation Database) or the SAS (Spectrum Access System) can also serve as the communication control device 40.

There can be a plurality of communication control devices 40 in a single communication system 2. In that case, the communication control devices 40 exchange information about the communication devices 20 managed by them, and allocate the required frequencies and calculate the interference control. More particularly, although the control targets for the communication control devices 40 are the communication devices 20; the terminal devices 30, which are subordinate devices of the communication devices 20, can also be controlled by the communication control devices 40.

Given below is the explanation of a specific configuration of the devices constituting the communication system 2.

### <2-2. Configuration of communication device>

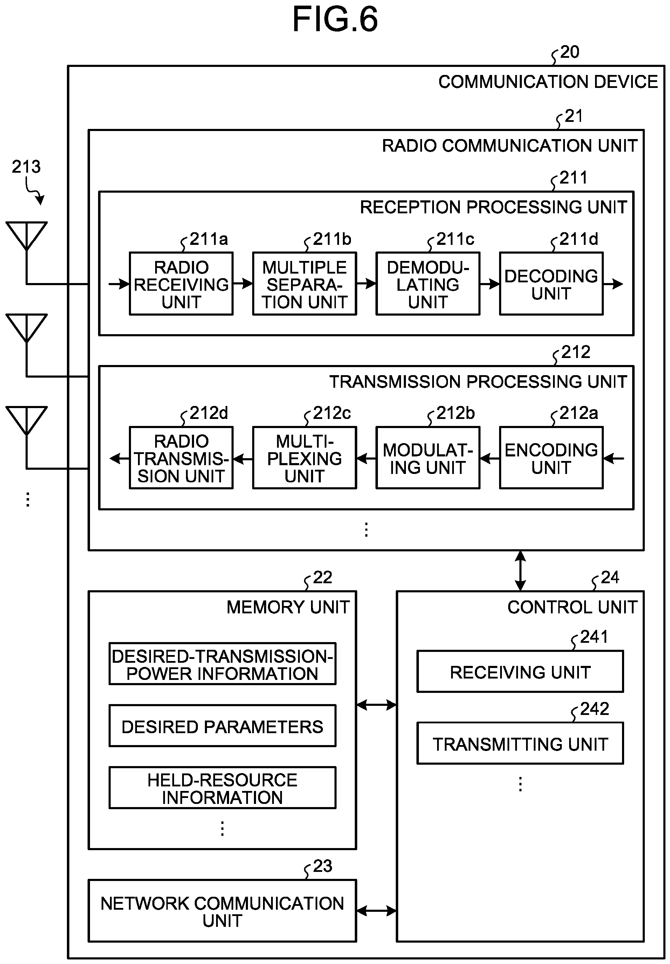

Firstly, the explanation is given about a configuration of the communication device 20. FIG. 6 is a diagram illustrating an exemplary configuration of the communication device 20 according to the embodiment of the application concerned. The communication device 20 is a radio communication device (a radio system) that performs radio communication with the terminal devices 30 under the control of the communication control device 40. For example, the communication device 20 is a base station device installed on the ground (i.e., a ground station device). In that case, the communication device 20 can be a base station device installed in a structure on the ground, or can be a base station device installed in a mobile object that moves on the ground. More particularly, the communication device 20 can be configured with an antenna installed on a structure, such as a building, and a signal processing device connected to the antenna. Of course, a structure or a mobile object itself can represent the communication device 20. Herein, "on the ground" is not limited to imply on land (above ground), and implies above ground in a broad sense that also includes underground, on the water, and underwater.

Moreover, the communication device 20 is not limited to a ground station device. Alternatively, the communication device 20 can be a base station device that is capable of moving or floating on air or in space (i.e., can be a non-ground station device). In that case, the communication device 20 can be an aircraft station device or a satellite station device.

An aircraft station device can be a device installed in an aircraft, or can be an aircraft itself. The concept of an aircraft not only includes a heavier-than-air aircraft such as an airplane or a glider, but also includes a lighter-than-air aircraft such as a balloon or an airship. Moreover, the concept of an aircraft also includes a rotary-wind airplane such as a helicopter or an autogiro. Meanwhile, an aircraft station device (or an aircraft in which an aircraft station device is installed) either can be a manned aircraft vehicle or can be an unmanned aircraft vehicle such as a drone.

A satellite station device can be a device installed in a space mobile object such as an artificial satellite, or can be a space mobile object itself. The satellite representing a satellite station device can be a low earth orbiting (LEO) satellite, a medium earth orbiting (MEO) satellite, a geostationary earth orbiting (GEO) satellite, or a highly elliptical orbiting (HEO) satellite. Of course, a satellite station device can be a device installed in an LEO satellite, an MEO satellite, a GEO satellite, or an HEO satellite.

Meanwhile, the communication device 20 can also be a relay station device. Examples of a relay station device include an aeronautical station or an earth station. A relay station device can be treated as a type of the relay device explained earlier. An aeronautical station is a radio station installed on the ground or in a mobile object, which moves on the ground, for the purpose of communicating with aircraft station devices. An earth station is a radio station positioned on the earth (including the air) for the purpose of communicating with satellite station devices. An earth station can be a large-sized earth station or can be a compact earth station such as a VSAT (Very Small Aperture Terminal). Moreover, an earth station can be a VSAT control earth station (also called a parent station or a HUB station) or can be a VSAT earth station (also called a child station). Furthermore, an earth station can be a radio station installed in a mobile object that moves on the ground. Examples of an earth station installed in a marine vessel include an ESV (Earth Stations on board Vessels). Moreover, an earth station can include an aircraft earth station that is installed in an aircraft (including a helicopter) and that communicates with satellite stations. Furthermore, an earth station can include an airborne earth station that is installed in a mobile object moving on the ground and that communicates with airborne earth stations via satellites. Meanwhile, a relay station device can be a portable radio station that communicates with satellite stations or aircraft stations.

The communication device 20 includes a radio communication unit 21, a memory unit 22, a network communication unit 23, and a control unit 24. Meanwhile, the configuration illustrated in FIG. 6 is a functional configuration, and the hardware configuration can be different than that. Moreover, the functions of the communication device 20 can be implemented by dispersing them across a plurality of physically-separated configurations.

The radio communication unit 21 is a radio communication interface that performs radio communication with other communication devices (for example, the terminal devices 30, the communication control devices 40, and the other communication devices 20). The radio communication unit 21 performs operations under the control of the control unit 24. The radio communication unit 21 can be compatible to a plurality of radio access methods. For example, the radio communication unit 21 can be compatible to the NR as well as the LTE. Moreover, the radio communication unit 21 can be compatible to other cellular communication methods such as the W-CDMA and the cdma2000. Furthermore, in addition to be compatible to the cellular communication methods, the radio communication unit 21 can be compatible to wireless LAN communication methods. Of course, the radio communication unit 21 can be configured to be compatible to only one radio access method.

The radio communication unit 21 includes a reception processing unit 211, a transmission processing unit 212, and an antenna 213. Herein, the radio communication unit 21 can include a plurality of reception processing units 211, a plurality of transmission processing units 212, and a plurality of antennas 213. When the radio communication unit 21 is compatible to a plurality of radio access methods, the constituent elements thereof can be individually configured for each radio access method. For example, when the communication device 20 is compatible to the NR and the LTE, the reception processing unit 211 and the transmission processing unit 212 can be individually configured for the NR and for the LTE.

The reception processing unit 211 processes the uplink signals received via the antenna 213. The reception processing unit 211 includes a radio receiving unit 211a, a multiple separation unit 211b, a demodulating unit 211c, and a decoding unit 211d.

The radio receiving unit 211a performs downconversion, removal of excess frequency components, amplification level control, orthogonal demodulation, conversion into digital signals, removal of the guard interval, and extraction of frequency domain signals according to the fast Fourier transform. For example, assume a cellular communication method such as the LTE is implemented as the radio access method of the communication device 20. In that case, the multiple separation unit 211b separates, from the signals output from the radio receiving unit 211a, uplink channels such as the PUSCH (Physical Uplink Shared Channel) and the PUCCH (Physical Uplink Control Channel), and the uplink reference signal. The demodulating unit 211c demodulates the received signals by implementing a modulation method such as the BPSK (Binary Phase Shift Keying) or the QPSK (Quadrature Phase Shift Keying) with respect to modulation symbols of the uplink channels. The demodulating unit 211c can alternatively implement a modulation method such as the 16QAM (Quadrature Amplitude Modulation), the 64QAM, or the 256QAM. The decoding unit 211d decodes the encoded bits of the demodulated uplink channels. Then, the demodulated uplink data and uplink control information is output to the control unit 24.

The transmission processing unit 212 transmits downlink control information and downlink data. The transmission processing unit 212 includes an encoding unit 212a, a modulating unit 212b, a multiplexing unit 212c, and a radio transmission unit 212d.

The encoding unit 212a encodes the downlink control information and the downlink data, which is input thereto from the control unit 24, according to an encoding method such as block encoding, convolutional encoding, or turbo encoding. The modulating unit 212b modulates the encoded bits, which are output from the encoding unit 212a, according to a predetermined modulation method such as the BPSK, the QPSK, the 16QAM, the 64QAM, or the 256QAM. The multiplexing unit 212c multiplexes the modulation symbols of each channel and the downlink reference signal, and places the result of multiplexing in a predetermined resource element. The radio transmission unit 212d performs a variety of signal processing with respect to the signals received from the multiplexing unit 212c. For example, the radio transmission unit 212d performs conversion into time domain according to the fast Fourier transform, addition of the guard interval, generation of digital signals of the baseband, conversion into analog signals, orthogonal modulation, up-conversion, removal of excess frequency components, and power amplification. Then, the signals generated by the transmission processing unit 212 are transmitted to the antenna 213.

The memory unit 22 is a data readable-writable memory device such as a DRAM, an SRAM, a flash memory, or a hard disk. The memory unit 22 functions as the memory unit of the communication device 20. The memory unit 22 is used to store desired-transmission-power information, operation parameters, and held-resource information.

The desired-transmission-power information represents the information about the transmission power that is requested by the communication device 20 to the communication control device 40 as the information about the transmission power required in radio wave transmission.

The operation parameters represent the information (for example, setting information) related to the radio wave transmission operation performed by the communication device 20. For example, the operation parameters represent the information about the maximum transmission power allowed in the communication device 20 (i.e., the information about the maximum allowable transmission power). Of course, the operation parameters are not limited to the information about the maximum allowable transmission power.

The held-resource information represents the information related to the holding of the radio resources in the communication device 20. For example, the held-resource information represents the information about the radio resources that are currently usable in the communication device 20. For example, the held-resource information represents the information about the stock of the interference margin allocated to the communication device 20 by the communication control device 40. The information about the stock can be information in the units of resource blocks (described later). That is, the held-resource information can be information related to the resource blocks (for example, the resource block stock) held by the communication device 20.

The network communication unit 23 is a communication interface meant for communicating with other devices. For example, the network communication unit 23 is a LAN (Local Area Network) interface such as an (Network Interface Card). Alternatively, the network communication unit 23 can be a USB (Universal Serial Bus) interface configured with a USB host controller or a USB port. Meanwhile, the network communication unit 23 can be a wired interface or a wireless interface. The network communication unit 23 functions as the network communication unit of the communication device 20. Under the control of the control unit 24, the network communication unit 23 communicates with other devices.

The control unit 24 is a controller that controls the constituent elements of the communication device 20. For example, the control unit 24 is implemented using a processor such as a CPU (Central Processing Unit) or an MPU (Micro Processing Unit). For example, the control unit 24 is implemented when the processor executes various programs, which are stored in an internal memory device of the communication device 20, using a RAM (Random Access Memory) as the work area. Alternatively, the control unit 24 can be implemented using an integrated circuit such as an ASIC (Application Specific Integrated Circuit) or an FPGA (Field Programmable Gate Array). Herein, any one of a CPU, an MPU, an ASIC, and an FPGA can be treated as the controller.

As illustrated in FIG. 6, the control unit 24 includes a receiving unit 241 and a transmitting unit 242. The blocks (the receiving unit 241 and the transmitting unit 242) constituting the control unit 24 are functional blocks indicating the functions of the control unit 24. These functional blocks can be implemented either as software blocks or as hardware blocks. For example, each functional block can be a single software module implemented using software (including microprograms), or can be a single circuit block on a semiconductor chip (die). Of course, each functional block can be a single processor or a single integrated circuit. Thus, the method of configuring the functional blocks is arbitrary. Meanwhile, the control unit 24 can be configured in different units of functions than the functional blocks mentioned above. The operations of the blocks (the receiving unit 241 and the transmitting unit 242) constituting the control unit 24 are explained in detail in the explanation given later about a communication control operation.

### <2-3. Configuration of terminal device>

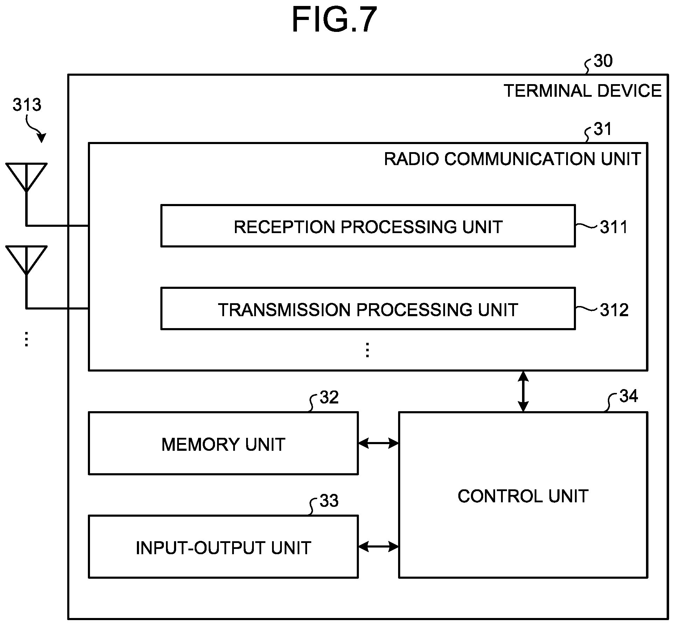

Given below is the explanation of a configuration of the terminal device 30. FIG. 7 is a diagram illustrating an exemplary configuration of the terminal device 30 according to the embodiment of the application concerned. The terminal device 30 is a communication device that performs radio communication with the communication devices 20 and the communication control devices 40. In the present embodiment, the concept of a communication device (a radio communication device) not only includes a base station device but also includes a terminal device. Moreover, a communication device can also be referred to as a radio system in other words.

The terminal device 30 includes a radio communication unit 31, a memory unit 32, an input-output unit 33, and a control unit 34. The configuration illustrated in FIG. 7 is a functional configuration, and the hardware configuration can be different from that. Moreover, the functions of the terminal device 30 can be implemented by dispersing them across a plurality of physically-separated configurations.

The radio communication unit 31 is a radio communication interface for performing radio communication with other communication devices (for example, the communication devices 20 and the other terminal devices 30). The radio communication unit 31 performs operations under the control of the control unit 34. The radio communication unit 31 is compatible to one or more radio access methods. For example, the radio communication unit 31 is compatible to the NR as well as the LTE. Alternatively, the radio communication unit 31 can be compatible to some other radio access method such as the W-CDMA or the cdma2000.

The radio communication unit 31 includes a reception processing unit 311, a transmission processing unit 312, and an antenna 313. Herein, the radio communication unit 31 can include a plurality of reception processing units 311, a plurality of transmission processing units 312, and a plurality of antennas 313. When the radio communication unit 31 is compatible to a plurality of radio access methods, the constituent elements thereof can be individually configured for each radio access method. For example, the reception processing unit 311 and the transmission processing unit 312 can be individually configured for the LTE and for the NR. The reception processing unit 311 and the transmission processing unit 312 have an identical configuration to the configuration of the reception processing unit 211 and the transmission processing unit 212, respectively, of the communication device 20.

The memory unit 32 is a data readable-writable memory device such as a DRAM, an SRAM, a flash memory, or a hard disk. The memory unit 32 functions as the memory unit of the terminal device 30.

The input-output unit 33 is a user interface for communicating information with the user. For example, the input-output unit 33 is an operating unit such as a keyboard, a mouse, operation keys, or a touch-sensitive panel that enables the user to perform various operations. Alternatively, the input-output unit 33 is a display device such as a liquid crystal display or an organic EL (Electroluminescence) display. Still alternatively, the input-output unit 33 can be an acoustic device such as a speaker or a buzzer. Still alternatively, the input-output unit 33 can be an illumination device such as an LED (Light Emitting Diode) lamp. The input-output unit 33 functions as an input-output unit (an input unit, an output unit, an operating unit, or a notifying unit) of the terminal device 30.

The control unit 34 is a controller that controls the constituent elements of the terminal device 30. For example, the control unit 34 is implemented using a processor such as a CPU or an MPU. For example, the control unit 34 is implemented when the processor executes various programs, which are stored in an internal memory device of the terminal device 30, using a RAM as the work area. Alternatively, the control unit 34 can be implemented using an integrated circuit such as an ASIC or an FPGA. Herein, any one of a CPU, an MPU, an ASIC, and an FPGA can be treated as the controller.

### <2-4. Configuration of communication control device>

The communication control device 40 is a device that controls the radio communication of the communication devices 20. Moreover, the communication control device 40 can control the radio communication of the terminal devices 30 either via the communication devices 20 or in a direct manner. The communication control device 40 is, for example, a network manager that performs integrated control of the radio devices present in the network. For example, the communication control device 40 is a spectrum manager/coexistence manager. Alternatively, the communication control device 40 can be a database server such as a GLDB (Geolocation Database) or an SAS (Spectrum Access System).

If the communication system 2 is a cellular communication system, then the communication control devices 40 can be devices constituting a core network. For example, a core network CN is an EPC (Evolved Packet Core) or a 5GC (5G Core network). If the core network is an EPC, then each communication control device 40 can function as, for example, an MME (Mobility Management Entity). If the core network is a 5GC, then each communication control device 40 can function as, for example, an AMF (Access and Mobility Management Function). Meanwhile, even when the communication system 2 is a cellular communication system, then the communication control devices 40 need not necessarily be the devices constituting the core network. For example, each communication control device 40 can function as, for example, an RNC (Radio Network Controller).

Meanwhile, the communication control devices 40 can also be configured to have the gateway function. For example, if the core network is an EPC, then each communication control device 40 can be configured to function as an S-GW (Serving Gateway) or a P-GW (Packet Data Network Gateway). If the core network is a 5GC, then each communication control device 40 can be configured to function as a UPF (User Plane Function). Meanwhile, the communication control devices 40 need not necessarily be the devices constituting the core network. For example, assume that the core network CN is a core network of the W-CDMA or the cdma2000. In that case, each communication control device 40 can be a device that functions as an RNC (Radio Network Controller).

Meanwhile, each communication control device 40 can be a system that controls a plurality of secondary systems. In that case, the communication system 2 can be treated as a system including a plurality of secondary systems.

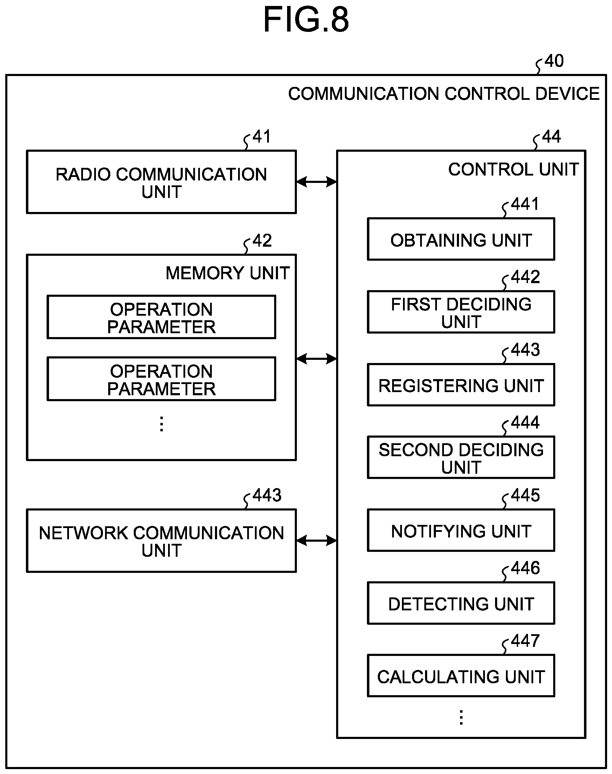

FIG. 8 is a diagram illustrating an exemplary configuration of the communication control device 40 according to the embodiment of the application concerned. The communication control device 40 includes a radio communication unit 41, a memory unit 42, a network communication unit 43, and a control unit 44. Meanwhile, the configuration illustrated in FIG. 8 is a functional configuration, and the hardware configuration can be different than that. Moreover, the functions of the communication control device 40 can be implemented by dispersing them across a plurality of physically-separated configurations. For example, the communication control device 40 can be configured using a plurality of server devices.

The radio communication unit 41 is a radio communication interface that performs radio communication with other communication devices (for example, the communication devices 20, the terminal devices 30, and the other communication control devices 40). The radio communication unit 41 performs operations under the control of the control unit 44. The radio communication unit 41 can be compatible to a plurality of radio access methods. For example, the radio communication unit 31 can be compatible to the NR as well as the LTE. Moreover, the radio communication unit 31 can be compatible to other cellular communication methods such as the W-CDMA and the cdma2000. The radio communication unit 41 has an identical configuration to the configuration of the radio communication unit 21 of the communication device 20.

The memory unit 42 is a data readable-writable memory device such as a DRAM, an SRAM, a flash memory, or a hard disk. The memory unit 22 functions as the memory unit of the communication device 20. The memory unit 22 is used to store the operation parameters of each of a plurality of communication devices 20 constituting the communication system 2. Meanwhile, the memory unit 22 can also be used to store the held-resource information of each of a plurality of communication devices 20 constituting the communication system 2. As explained earlier, the held-resource information represents the information related to the holding of the radio resources by the communication devices 20.

The network communication unit 43 is a communication interface meant for communicating with other devices. The network communication unit 43 can be a network interface, or can be a device connection interface. For example, the network communication unit 43 is a LAN (Local Area Network) interface such as an NIC (Network Interface Card). Alternatively, the network communication unit 43 can be a USB (Universal Serial Bus) interface configured with a USB host controller or a USB port. Meanwhile, the network communication unit 43 can be a wired interface or a wireless interface. The network communication unit 43 functions as the network communication unit of the communication control device 40. Under the control of the control unit 44, the network communication unit 43 communicates with the communication devices 20 and the terminal devices 30.

The control unit 44 is a controller that controls the constituent elements of the communication control device 40. For example, the control unit 44 is implemented using a processor such as a CPU or an MPU. For example, the control unit 44 is implemented when the processor executes various programs, which are stored in an internal memory device of the communication control device 40, using a RAM as the work area. Alternatively, the control unit 44 can be implemented using an integrated circuit such as an ASIC or an FPGA. Herein, any one of a CPU, an MPU, an ASIC, and an FPGA can be treated as the controller.

As illustrated in FIG. 8, the control unit 44 includes an obtaining unit 441, a first deciding unit 442, a registering unit 443, a second deciding unit 444, a notifying unit 445, a detecting unit 446, and a calculating unit 447. The blocks (the obtaining unit 441 to the calculating unit 447) constituting the control unit 44 are functional blocks indicating the functions of the control unit 44. These functional blocks can be implemented either as software blocks or as hardware blocks. For example, each functional block can be a single software module implemented using software (including microprograms), or can be a single circuit block on a semiconductor chip (die). Of course, each functional block can be a single processor or a single integrated circuit. Thus, the method of configuring the functional blocks is arbitrary. Meanwhile, the control unit 44 can be configured in different units of functions than the functional blocks mentioned above. The operations of the blocks (the obtaining unit 441 to the calculating unit 447) constituting the control unit 44 are explained in detail in the explanation given later about the communication control operation.

### <<3. Interference model>>

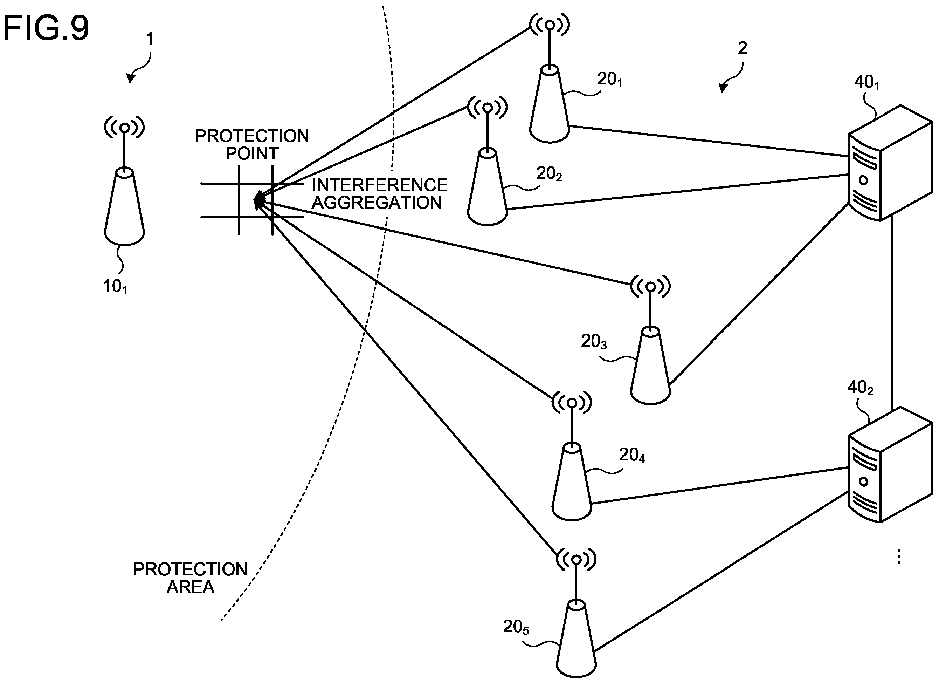

Given below is the explanation of an interference model considered in the present embodiment. FIG. 9 is an explanatory diagram illustrating an example of the interference model considered in the present embodiment. The interference model illustrated in FIG. 9 is implemented when, for example, the primary system has a service area. For example, the service area is the protection area of the communication system 1. In the protection area, a plurality of caused-interference calculation reference points (hereinafter, protection points) is set. The protection points are set by the operator of the communication system 1 or by the official organization for managing the radio waves (hereinafter, called a manager). For example, the manager can partition the protection area in a grid-like manner and set the protection points as the center of predetermined grids. Herein, the method for deciding the protection points is arbitrary. The interference margin of each protection point is set by the manager. In FIG. 9 is illustrated the interference caused at a protection point by a plurality of communication devices 20 constituting the communication system 2 (the secondary systems). The communication control devices 40 of the communication system 2 control the transmission power of the communication devices 20 in such a way that the interference aggregation at each protection point does not exceed the set interference margin.

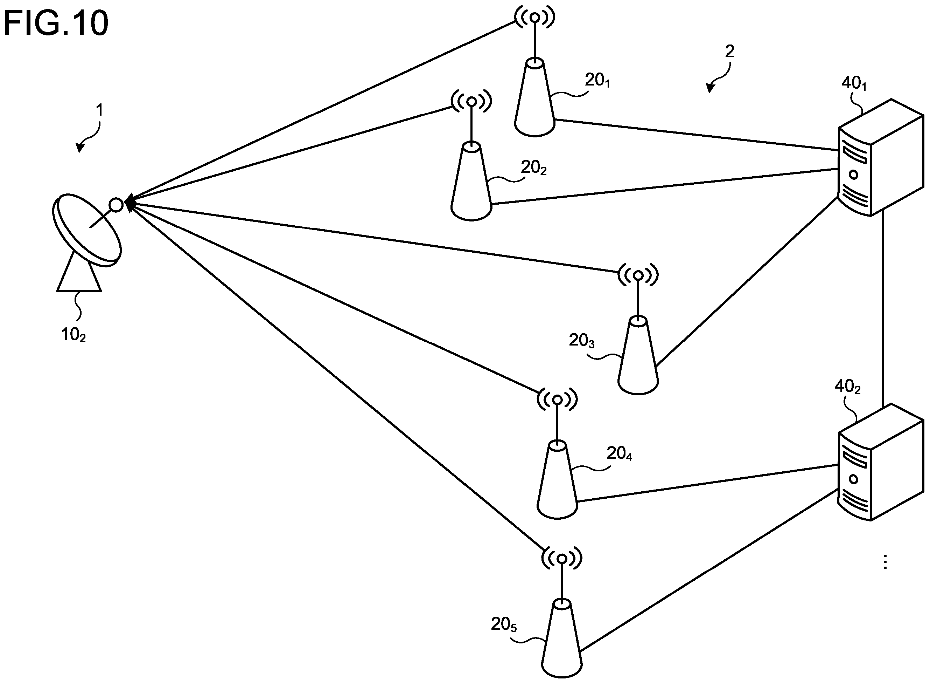

FIG. 10 is an explanatory diagram illustrating another example of the interference model considered in the present embodiment. The interference model illustrated in FIG. 10 is applied when, for example, the primary system performs only reception. In the example illustrated in FIG. 10, the communication system 1 (the primary system) includes a reception antenna as a communication device 10₂. The communication device 10₂ is, for example, a receiving antenna of a satellite earth station. The communication control devices 40 of the communication system 2 set the position of the receiving antenna as the protection point and control the transmission power of a plurality of communication devices 20 in such a way that the interference aggregation at that protection point does not exceed the interference margin.

### << Primary system protection method>>

Given below is the explanation about a primary system protection method. From among the known primary system protection methods, regarding the methods involving a caused-interference calculation operation, it is possible to make a broad classification into the following two types.
(1) interference margin (allowable interference amount) wholesale distribution type
(2) low-interference node priority allowance type

Examples of the primary system protection method of the interference margin (allowable interference amount) wholesale distribution type include the maximum allowable EIRP calculation method disclosed in Non Patent Literature 3 and the IAP (Iterative Allocation Process) disclosed in Non Patent Literature 2.

Examples of the primary system protection method of the low-interference node priority allowance type include the move list calculation method that is disclosed in Non Patent Literature 2 as the method for protecting the DPA (Dynamic Protection Area).

Given below is the explanation of the primary system protection method of the "low-interference node priority allowance type" (a first method) and the primary system protection method of the "interference margin wholesale distribution type" (a second method).

### <4-1. Interference margin wholesale distribution type>

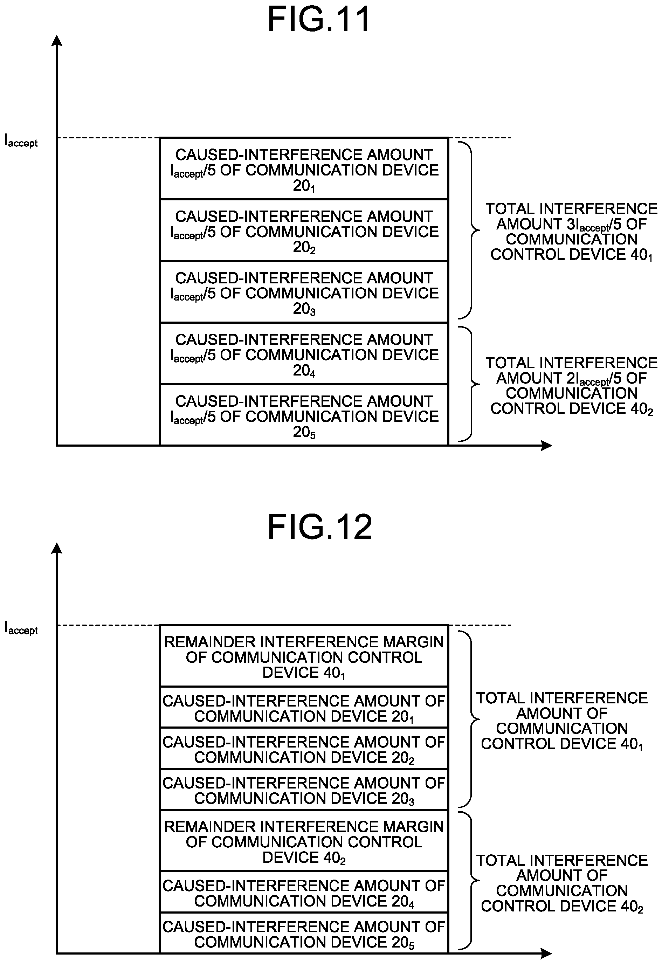

Firstly, the explanation is given about the primary system protection method of the interference margin wholesale distribution type (the second method). FIG. 11 is an explanatory diagram for explaining the primary system protection method of the interference margin wholesale distribution type. In the example illustrated in FIG. 11, I_{accept} represents the allowable interference threshold value of the primary system. That threshold value can be an actual threshold value, or can be a value set in anticipation of a certain level of margin (for example, the protection ratio) from the actual threshold value, by taking into account the calculation error or the interference fluctuation.

In the primary system protection method of the interference margin wholesale distribution type, interference control implies deciding the transmission power (the EIRP, the conducted Power + the antenna gain) of the radio devices in such a way that the allowable interference threshold value is not exceeded. If the communication devices 20 are present in a large number and if it is ensured that each communication device 20 does not exceed the allowable interference threshold value, then there is a risk that the interference power received in the communication system 1 (the primary system) exceeds the allowable interference threshold value. In that regard, based on the number of communication devices 20 registered in the communication control device 40, the interference margin (the allowable interference amount) is "distributed".

For example, in the example illustrated in FIG. 11, a total of five communication devices 20 are present . Hence, each communication device 20 gets distributed with the allowable interference amount of I_{accept}/5. The communication devices 20 are not able to recognize the distribution amount by themselves, and either can recognize the distribution via the communication control device or can obtain the transmission power decided based on that distribution amount. A communication control device cannot know the number of radio devices managed by the other communication control devices. Hence, the communication control devices communicate information with each other so as to become able to recognize the total number of communication devices 20 and to distribute the allowable interference amount. For example, in the communication control device 40₁, the allowable interference amount equal of 3I_{accept}/5 is allocated.

In this method, the interference margin is distributed to the communication devices 20 that either are in operation at the point of time of calculation or are starting operations newly. Thus, in the case of performing calculation on a periodic basis, there is no calculational surplus (remainder) of the interference margin in between. In that regard, if the interference margin is reserved in advance, it also becomes possible to distribute the interference margin to new secondary systems outside of the calculation time.

FIG. 12 is a diagram illustrating a situation in which the interference margin is reserved in advance. In FIG. 12 is illustrated the total interference amount that is set in each of the two communication control devices 40 (the communication control devices 40₁ and 40₂). Moreover, in FIG. 12 is illustrated the amount of interference caused (i.e., the caused-interference amount) at a predetermined protection point in the communication system 1 by a plurality of communication devices 20 (the communication devices 20₁ to 20₅) managed by the two communication control devices 40. When the interference amount caused by the communication devices 20 is subtracted from the total interference amount of each of the two communication control devices 40, the result represents the corresponding reserved interference margin. In the following explanation, the reserved interference amount or the surplus interference amount is called the remainder interference margin. In other words, the remainder interference margin can be called the remainder interference amount.

### <4-2. Low-interference node priority allowance type>

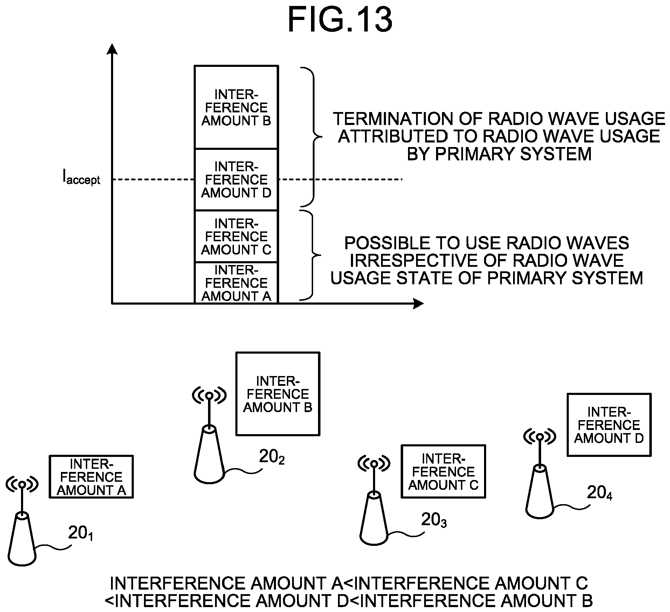

Firstly, the explanation is given about the primary system protection method of the low-interference node priority allowance type (the first method). FIG. 13 is an explanatory diagram for explaining the primary system protection method of the low-interference node priority allowance type. The low-interference node priority allowance type is assumed to be implemented when the primary system uses the radio waves for a short term and in an aperiodic manner. For example, the low-interference node priority allowance type is implemented for protecting the navigation area called the DPA (Dynamic Protection Area) of a carrier-based radar set on the sea. In each case, a detection unit is illustrated for detecting the radio wave usage of the primary system. In the case of the DPA, that is, in the case of a carrier-based radar; the detection of radar radio waves by a radio wave sensing system called the ESC (Environmental Sensing Capability) has been disclosed.

In this method, unlike in the method explained earlier, wholesale distribution of the interference margin is not performed. Based on the operation parameters of the secondary systems or based on the desired operation parameters of newly-operating secondary systems, the communication control device 40 estimates the amount of interference that could be caused in the primary system by each individual secondary system. Then, the communication control device 40 allows the radio wave usage on a priority basis in ascending order of the interference amounts of the secondary systems. Although the secondary systems causing a large interference amount are also allowed to use the radio waves; when the abovementioned radio wave usage detecting unit is used to detect the radio wave usage by the primary system, the radio wave usage of such secondary systems is terminated. The set of secondary systems for which the radio wave usage is terminated at the time of detection of the radio wave usage by the primary system is defined as the DPA move list in Non Patent Literature 2.

### <4-3. Occurrence of remainder interference margin>

In either method, the interference margin does not necessarily become equal to zero, and there can be some remainder. Moreover, when the communication control device 40 reserves a predetermined interference margin in advance and performs the interference margin distribution calculation, the setting can be assumed to be done to ensure that there is a remainder interference margin. In the case of performing the interference margin distribution calculation on a periodic basis, the remainder interference margin becoming available in such a manner can be utilized in the frequency allocation to new secondary systems that come up in the concerned period.

Assume that a secondary system that is already allocated with some other frequencies gets allocated with additional frequencies using the remainder interference margin. In that case, regarding a totally new secondary system that has not been allocated any frequencies at all, there is a risk that frequency allocation can no longer be performed. Hence, such a secondary system needs to wait till the next interference margin distribution calculation timing.

In that regard, in the present invention, a method for radio resource allocation (the interference margin and the frequencies) is provided that enables resolving such unfairness.

### <<5. Operations of communication system>>

Given below is the explanation of the operations performed in the communication system 2 (the secondary system).

### <5-1. Communication control operation>

Firstly, the explanation is given about a communication control operation performed in the communication system 2. The communication control operation is related to the radio wave transmission by one or more communication devices 20 (the secondary systems) that perform radio communication using the radio waves of the frequency band used by one or more communication systems 1 (the primary systems).

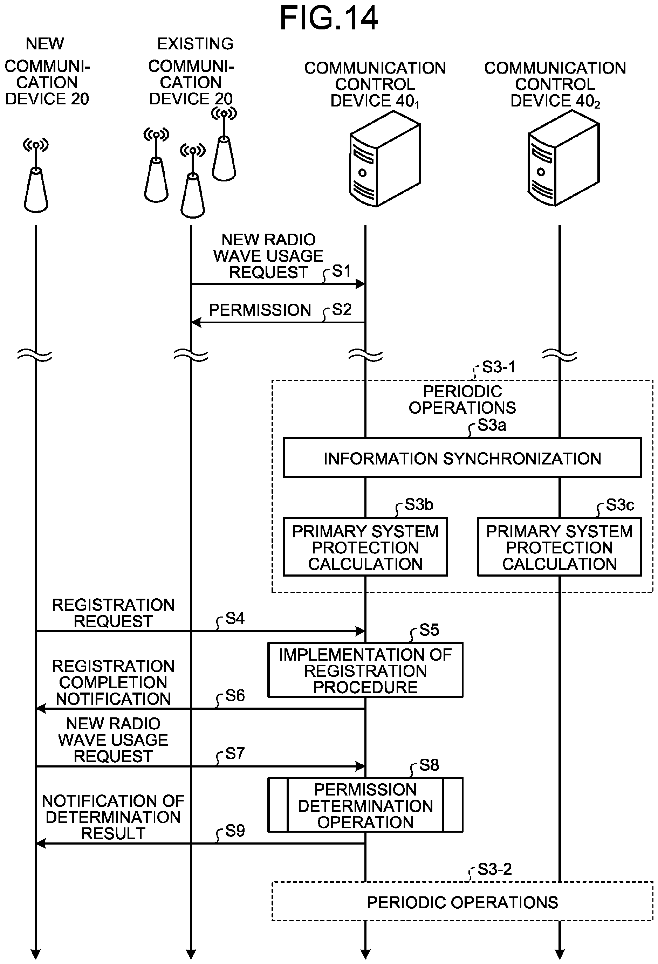

FIG. 14 is a sequence diagram illustrating an example of the communication control operation performed according to the embodiment of the application concerned. Meanwhile, in FIG. 14, although only two communication control devices 40 are illustrated, there can be more than two communication control devices 40. Of course, there can be only one communication control device 40. Each of a plurality of communication control devices 40 can perform the same operations. For example, each of a plurality of communication control devices 40 can decide on the operation parameters of all communication devices 20 included in the communication system 2. In that case, for a predetermined communication device 20, a plurality of communication control devices 40 happens to decide the same operation parameters.

In the following explanation, in order to facilitate understanding, when the explanation requires identifying an individual communication control devices 40, the communication control device 40₁ is considered to be the target for the operations. Of course, the other communication control devices 40 (for example, the communication control device 40₂) can alternatively be considered to be the target for the operations. Meanwhile, the communication control devices 40 can control the radio communication of the terminal devices 30 either via the communication devices 20 or in a direct manner. In that case, in the following explanation, the term "the communication devices 20" can be substituted with the term "the terminal devices 30". As explained earlier, the terminal devices 30 too are a type of communication devices.

The following explanation of the operations is given under the following conditions.
(Condition 1) The concerned communication control device 40 periodically synchronizes information with the other communication control devices 40, and performs primary system protection calculation.
(Condition 2) A secondary system that has got the radio wave usage permission at the point of time of starting the information synchronization is called an "existing secondary system" or an "existing communication device 20".
(Condition 3) A secondary system that, after the primary system protection calculation, attempts to newly start using the radio waves (i.e., issues a new radio wave usage request) till the next implementation of the periodic operations is called a "new secondary system" or a "new communication device 20".

Meanwhile, at the point of time of issuing a new radio wave usage request, an existing secondary system (an existing communication device 20) is also a "new secondary system (a new communication device 20)". However, in order to facilitate understanding, it is assumed that the existing secondary system (the existing communication device 20) has completed the radio wave usage permission formalities in a normal manner.

Given below is the explanation of the communication control operation performed according to the embodiment of the application concerned. The communication control operation is started when, for example, the power is applied to the devices.

Firstly, the obtaining unit 441 of the communication control device 40₁ obtains a new radio wave usage request from an existing communication device 20 (Step S1). The new radio wave usage request is sent by, for example, the transmitting unit 242 of the communication device 20. The new radio wave usage request can include the held-resource information of the communication device 20. Alternatively, the obtaining unit 441 can obtain the held-resource information of the concerned communication device 20 from the memory unit 42. Then, the notifying unit 445 of the communication control device 40₁ notifies the existing communication device 20 about the permission to use the radio waves (Step S2).

Subsequently, each of a plurality of communication control devices 40 performs the operations that are carried out on a periodic basis (hereinafter, called periodic operations) (Step S3-1). Firstly, each of a plurality of communication control devices 40 synchronizes the information with the other communication control devices 40 (Step S3a). Then, each of a plurality of communication control devices 40 performs the primary system protection calculation (Step S3b and Step S3c). For example, with respect to a communication system in which the "interference margin (allowable interference amount) wholesale distribution type" is applied (i.e., with respect to a primary system), the first deciding unit 442 of each communication control device 40 performs protection calculation based on a known method. Moreover, with respect to a communication system in which the "low-interference node priority allowance type" is applied (i.e., with respect to a primary system); the first deciding unit 442 of each communication control device 40 decides on following information (1) to (3) as the primary system protection calculation, and records the information.

(1) estimated value of the amount of interference that could be separately caused in the primary system by individual communication nodes
(2) move list
(3) remainder interference margin

Herein, the communication nodes imply, for example, the communication devices 20. Moreover, the remainder interference margin implies the interference margin that is in surplus. The remainder interference margin can also include the interference margin to be reserved in advance. Furthermore, the move list represents the group of such communication nodes that are allowed to use the radio waves in the normal situation but that are demanded to terminate the radio wave usage only when the radio wave usage of a primary system is detected (i.e., the move list represents the group of communication nodes subjected to forced termination). Hereinafter, the move list is sometimes referred to as a "forced termination list". Meanwhile, in the following explanation, the communication nodes (the communication devices 20) that are demanded to terminate the radio wave usage only when the radio wave usage of a primary system is detected are sometimes referred to as "systems subjected to forced termination".

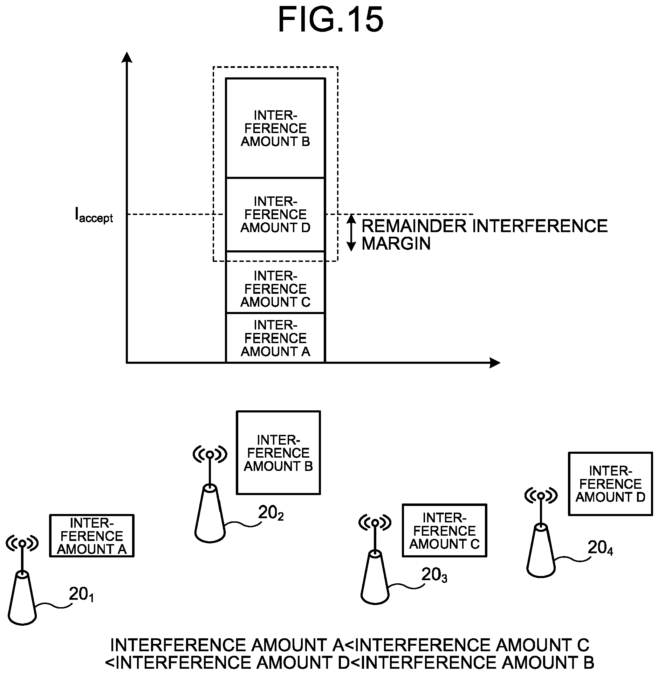

The first deciding unit 442 calculates the forced termination list (move list) in, for example, the following sequence. For example, the first deciding unit 442 estimates the interference amount of individual secondary systems (for example, the communication devices 20) and sorts the secondary systems in ascending order of the interference amounts. Then, in that order, the first deciding unit 442 sequentially compares the aggregated interference amount with the allowable interference amount. In the example illustrated in FIG. 15, the first deciding unit 442 firstly evaluates an interference amount A. Since the interference amount A is smaller than the allowable interference amount, the first deciding unit 442 then compares the sum of the interference amount A and an interference amount C (i.e., A+C) with the allowable interference amount. Since that sum too is smaller than the allowable interference amount, the first deciding unit 442 further compares the sum of the interference amount A, the interference amount C, and an interference amount D (i.e., A+C+D) with the allowable interference amount. That sum exceeds the allowable interference amount. Hence, the communication device 20₄ and the secondary systems causing a greater interference than the communication device 20₄ (i.e., herein, the communication device 20₂) are stored in the move list.

It is desirable that such information is recorded for each interference calculation control point (also called a protection point or a reference point) in the primary system protection calculation. Moreover, it is desirable that such information is recorded for each frequency. In the example illustrated in FIG. 15, the difference between I_{accept} and the interference amount A+C becomes the remainder interference margin.

Till the next implementation of the periodic operations (Step S3-2 illustrated in FIG. 14), the obtaining unit 441 of the communication control device 40₁ receives a registration request from a new communication device 20 (Step S4). The registration request is sent by, for example, the transmitting unit 242 of the communication device 20. Then, the registering unit 443 of the communication control device 40₁ performs a registration procedure for the new communication device 20 (Step S5). In the registration procedure, for example, the following information gets registered.

(1) information unique to the secondary system (the serial number and the product model information)
(2) information indicating the type of the base station
(3) installation position information (the latitude, the longitude, the altitude, and accuracy information at the time of obtaining position information)
(4) antenna information (the position, the height, the orientation, and the beam pattern)
(5) radio interface information (an identifier for the radio standard, version information, and duplex mode information)
(6) public certification information (the public certification number/ID, the maximum EIRP, and the corresponding frequency band)
(7) installation personnel information (the installation personnel ID, the digital signature, and the point of contact)

The information indicating the type of the base station can be, for example, an identifier indicating the high output type/low output type. Alternatively, the information indicating the type of the base station can be an identifier indicating a macro cell/small cell. Meanwhile, four base station types defined in the 3GPP TS 38.104 V15.0.0 (BS type 1-C, BS type 1-H, BS type 1-0, and BS type 2-O) have been disclosed. The information indicating the type of the base station can be information indicating those base station types.

The new communication device 20 generates a registration request using device parameters and notifies the communication control device 40 about the request. At that time, if the installation personnel information is included in the device parameters, then the new communication device 20 can use that information and perform tamper-proof processing of the registration request. Moreover, some of all of the information included in the registration request can be encrypted. Furthermore, regarding the installation position information, for example, the installation personnel can directly write the information in the communication control device 40.

After the registering unit 443 has performed the registration operation for the new communication device 20, the notifying unit 445 of the communication control device 40₁ sends a registration completion notification according to the result of the registration operation (Step S6). Meanwhile, it is also possible to skip the registration procedure. In that case, from among the parameters mentioned above, at least the position information and the unique information enabling identification of the secondary system are included in the radio wave usage request.

Subsequently, the obtaining unit 441 of the communication control device 40₁ receives a new radio wave usage request from a new communication device 20 (Step S7). The new radio wave usage request is sent by, for example, the transmitting unit 242 of the communication device 20. The new radio wave usage request can include the held-resource information of the communication device 20. Alternatively, the obtaining unit 441 can obtain the held-resource information of the concerned communication device 20 from the memory unit 42. Meanwhile, the information related to the holding of the radio resources can be included in a registration request. Moreover, the radio usage request can be notified in an integrated manner with the registration request.

Then, the second deciding unit 444 of the communication control device 40₁ performs a permission determination operation (Step S8). The explanation about the permission determination operation is given later. Subsequently, the notifying unit 445 of the communication control device 40₁ notifies the new communication device 20 about the permission determination result (permission granted or permission rejected) (Step S9). If the permission for radio wave usage is granted, then the new communication device 20 transmits radio waves as may be necessary.

The first deciding unit 442 of the communication control device 40₁ again performs the periodic operations after the elapse of a certain period of time (for example, after the elapse of a day) since the previous implementation of the periodic operations (Step S3-1 illustrated in FIG. 14) (Step S3-2). In the periodic operations, the operation parameters of the communication device 20 are decided. In the following explanation, the period of the periodic operations is sometimes called the decision period for the operation parameters.

### <5-2. Resource blocks>

Prior to the explanation about the permission determination operation performed at Step S8, the following explanation is given about resource blocks. In the present embodiment, a unit block of the allocated frequencies is defined and, depending on the stock of such frequency blocks (hereinafter, called resource blocks), frequency allocation is performed based on the remainder interference margin. The "resource block" according to the present embodiment is not necessarily identical to the "resource block" in the LTE/5G NR.

As far as the elements constituting a resource block are concerned, at least the channel bandwidth is included. As far as the unit bandwidth is concerned, it is desirable that the minimum bandwidth set for each band frequency is adapted. For example, in the CBRS band, it is desirable that 10 MHz is used as the unit bandwidth. Moreover, for example, regarding the TV bandwidth, values such as 6 MHz (the USA) and 8 MHz (Europe) can be set.

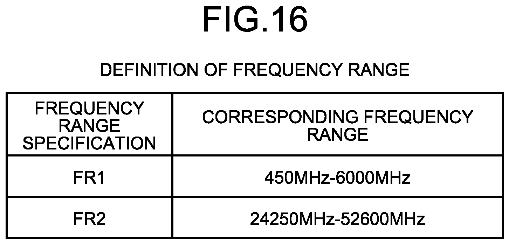

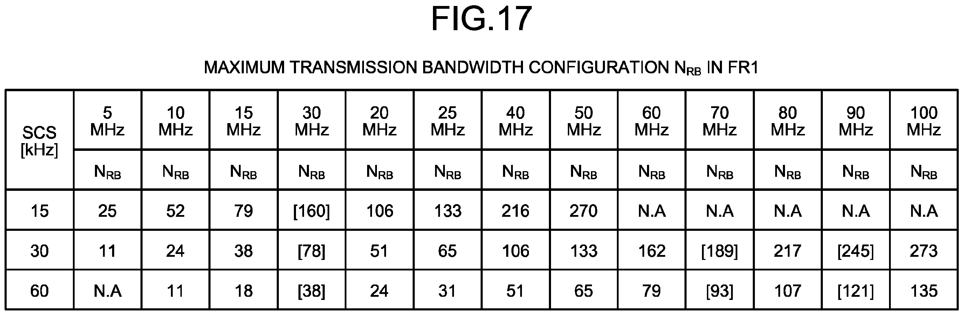

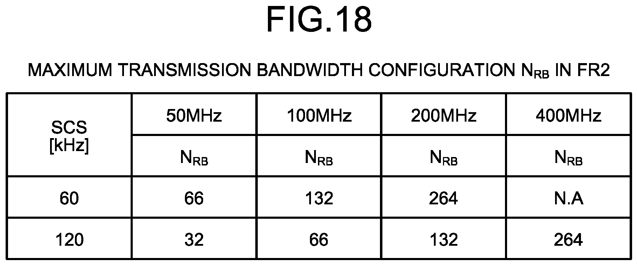

According to the 3GPP TS 38.104 V15.0.0, in the 5G NR, the frequency range is defined as illustrated in FIG. 16, and the maximum transmission bandwidth of the base stations is specified as illustrated in FIGS. 17 and 18. Consequently, in the shared band frequency included in FR1, it is desirable to use 5 MHz as the unit bandwidth; and, in the shared band frequency included in FR2, it is desirable to use 50 MHz as the unit bandwidth.

As far as the elements constituting a resource block are concerned, the parameters dependent on the transmission power can be used. For example, the maximum transmission EIRP allowed in the allocated frequency channels can be used. In that case, a numerical value such as 1 dBm or 1 mW can be used as the unit EIRP. Alternatively, for example, the coverage (area) calculated using the maximum transmission EIRP can be used. In that case, the area of the coverage calculated using the unit EIRP can be treated as the unit area.

For example, assume that the unit block has the bandwidth of 1 MHz and the transmission power of 1 mW. In that case, the unit resource block size becomes equal to 1 (=1×1). At that time, for example, if it is assumed that a communication device is allocated with the bandwidth of 3 MHz and the transmission power of 3 mW, then the communication device has the resource block stock equal to 9 (= (3×3) / (1×1)) .

However, the definition of the resource block stock is not limited to the explanation given above. For example, different definitions of the stock can be used according to the time slot (for example, the time slot in which the output is allowed, such as the morning time or the afternoon time) or according to the area in which the concerned communication device is located. Alternatively, the unit block size can be changed.

For example, the unit block size can be changed according to the output class of the communication device. More particularly, for example, the transmission power axis can set as the ratio with the maximum transmission power specified in the output class. For example, when there are two types of the maximum transmission power, namely, 30 dBm (low output) and 40 dBm (high output) specified in the output class, the communication devices in the low output class have the transmission power of 30 dBm to be the maximum value, but the communication devices in the high output class have the transmission power to be lower by 10 dBm from the maximum value. In that regard, for the low output class, a coefficient of 1/1000 can be multiplied to the resource block stock; and, for the high output class, a coefficient of 1/10000 can be multiplied to the resource block stock.

It is desirable that the communication control device records the resource block stock, which is defined in the manner given above, in the units of communication devices.

### <5-3. Permission determination operation (first example)>

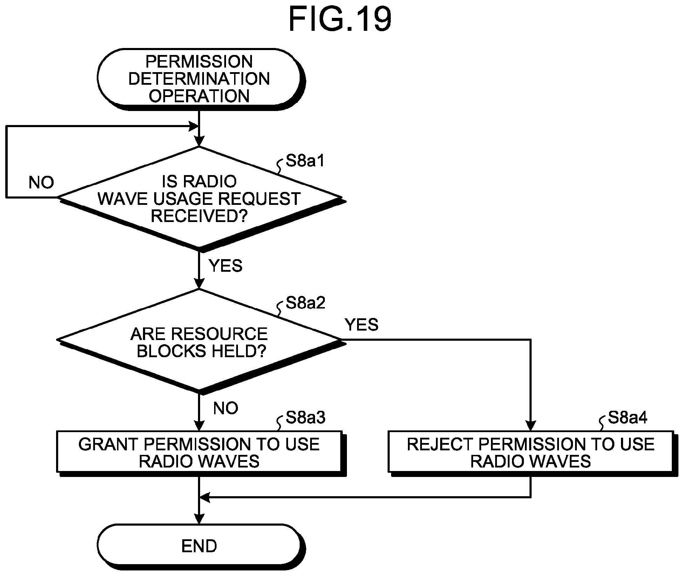

Given below is the explanation of the permission determination operation (first example). FIG. 19 is a flowchart for explaining an example of the permission determination operation performed according to the embodiment of the application concerned. The permission determination operation is an operation for determining whether or not to grant permission of radio wave usage to a new communication device 20 (a new secondary system). The permission determination operation is performed in the period between instances of deciding the operation parameters (i.e., in between two instances of periodic operations). For example, the permission determination operation is performed at Step S8 of the communication control operation explained earlier.

Meanwhile, in the present embodiment, a "new secondary system" implies a secondary system that is not allocated with predetermined frequencies. That is, a new secondary system not only includes a secondary system that does not have any allocated frequencies, but also includes a secondary system that is allocated with some other frequencies than the predetermined frequencies.

Firstly, the second deciding unit 444 of the communication control device 40₁ determines whether a radio wave usage request is received from a new communication device 20 (a new secondary system) (Step S8a1). If a radio wave usage request is not received (No at Step S8a1), then the second deciding unit 444 repeatedly performs the operation at Step S8a1 until a radio wave usage request is received.

If a radio wave usage request is received (Yes at Step S8a1), then the second deciding unit 444 confirms, based on the held-resource information of the new communication device 20, whether or not the new communication device 20 holds resource blocks (Step S8a2). As explained earlier, the held-resource information is obtained by the obtaining unit 441. The obtaining unit 441 can obtain the held-resource information either from the communication device 20 or from the memory unit 42.

If the new communication device 20 is not holding resource blocks (No at Step S8a2), then the second deciding unit 444 accepts the request (Step S8a3). On the other hand, if the new communication device 20 is holding resource blocks (Yes at Step S8a2), then the second deciding unit 444 rejects the request (Step S8a4).

Herein, "accepting a request" implies allocating frequencies if the primary system protection has been achieved and not allocating frequencies if the primary system protection has not been achieved. That is, in the case of "accepting a request"; if the primary system protection has been achieved, then the second deciding unit 444 allocates frequencies to the new communication device 20. However, if the primary system protection has not been achieved, then the second deciding unit 444 does not allocate frequencies to the new communication device 20.

Once the permission determination for radio wave usage is completed, the second deciding unit 444 ends the permission determination operation.

As a result, radio wave resources are not allocated to the secondary systems that are already holding resource blocks, thereby enabling maintaining impartiality among the secondary systems. Hence, the radio waves can be used in an efficient manner.

### <5-4. Permission determination operation (second example)>

Given below is the explanation of a permission determination operation (second example). In the permission determination operation (first example) explained above, the communication device 20 holding the resource blocks is unilaterally disallowed from using the radio waves (i.e., additional allocation is unilaterally rejected). However, that operation is not necessarily the most suitable operation. In that regard, in the permission determination operation (second example), the determination about the resource block stock is performed based on the relative comparison with the other communication devices 20.

In this example, every time the periodic primary system protection calculation is performed, the maximum value of the resource block stock of the communication device 20 for which the primary system calculation is to be performed is identified. Then, the second deciding unit 444 performs the comparison using that maximum value as the reference value.

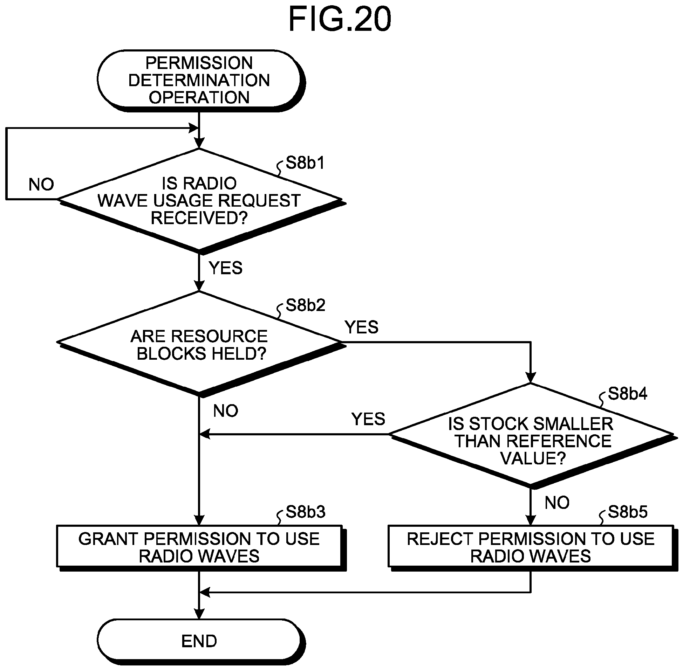

FIG. 20 is a flowchart for explaining another example of the permission determination operation performed according to the embodiment of the application concerned.

Firstly, the second deciding unit 444 of the communication control device 40₁ determines whether a radio wave usage request is received from a new communication device 20 (a new secondary system) (Step S8b1). If a radio wave usage request is not received (No at Step S8b1), then the second deciding unit 444 repeatedly performs the operation at Step S8b1 until a radio wave usage request is received.

If a radio wave usage request is received (Yes at Step S8b1), then the second deciding unit 444 confirms, based on the held-resource information, whether or not the new communication device 20 holds resource blocks (Step S8b2). As explained earlier, the held-resource information is obtained by the obtaining unit 441. The obtaining unit 441 can obtain the held-resource information either from the communication device 20 or from the memory unit 42.

If the new communication device 20 is not holding resource blocks (No at Step S8b2), then the second deciding unit 444 grants permission to the new communication device 20 to use the radio waves (Step S8b3).

On the other hand, if the new communication device 20 is holding resource blocks (Yes at Step S8b2), then the second deciding unit 444 determines whether or not the stock of the resource blocks is smaller than the reference value (Step S8b4). The stock of the resource blocks can be calculated by the calculating unit 447 based on the information related to the new communication device 20. At that time, the information related to the new communication device 20 can be the information about the frequencies allocated to the new communication device 20. For example, the calculating unit 447 converts the frequencies into resource blocks and calculates the stock of the resource blocks. The obtaining unit 441 obtains the information about the stock calculated by the calculating unit 447. If the stock is smaller than the reference value (Yes at Step S8b4), then the second deciding unit 444 grants permission to the new communication device 20 to use the radio waves (Step S8b3). That is, the second deciding unit 444 agrees to additional frequency allocation to the new communication device 20.

On the other hand, if the stock is equal to or greater than the reference value (No at Step S8b4), then the second deciding unit 444 does not grant permission to the new communication device 20 to use the radio waves (Step S8b5).

Once the permission determination for radio wave usage is completed, the second deciding unit 444 ends the permission determination operation.

As a result of performing the determination in such a manner, the total amount of frequency allocation (i.e., the resource block stock) of the secondary systems can be maintained at a certain level, thereby enabling resolution of unfairness. Meanwhile, when the resource block stock is maintained at a certain level among all secondary systems, the communication control device 40 can raise the reference value.

In this flowchart, when the radio wave usage is disallowed, the communication control device 40 can notify the communication device 20 about recommended communication parameters (recommended operation parameters) such as the frequency channels and/or the maximum transmission EIRP assumed to enable resource block allocation in the range in which the stock is smaller than the reference value. Using those communication parameters (operation parameters), the communication device 20 can again issue a radio usage request to the communication control device 40.

As a result, radio resources are not allocated to the secondary systems that already have the resource block stock to be equal to or greater than the reference value, thereby enabling maintaining impartiality among the secondary systems. Hence, the radio waves can be used in an efficient manner.

### <5-5. Permission determination operation (third example)>

Given below is the explanation of the permission determination operation (third example). In the permission determination operation (second example), it is ensured that the resource block stock can satisfy a certain level among all communication devices. However, depending on the business agreement between the user of the communication device 20 (for example, a telecommunications carrier) and the administrator/operator of the communication control device 40 or depending on the form of the services provided by the administrator/operator of the communication control device 40, there are times when the upper limit of the resource block stock can be set according to the contractual coverage.

As an example, it is possible to think of a case in which the resource block stock for each predetermined area is set in stepwise manner. More particularly, for example, if the number of allocatable channels in a predetermined area is assumed to be 10, then the stock from 1 to 10 can be set according to the priority.

In that regard, in the third example, priority is set for the resource block stock, and the determination is performed based on the priority.

In the third example, particularly, when the communication control devices 40 and the communication devices 20 are operated by different business operators, it is desirable that identifiers (such as user IDs or call signs) enabling identification of the communication devices 20 are provided at the time of the registration of the communication devices 20. Moreover, it is desirable that priority is set corresponding to those identifiers.

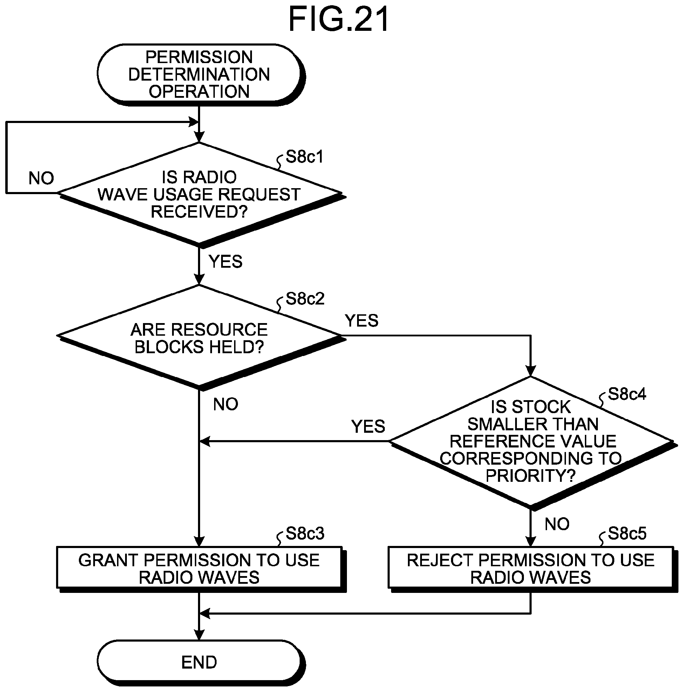

FIG. 21 is a flowchart for explaining still another example of the permission determination operation performed according to the embodiment of the application concerned.

Firstly, the second deciding unit 444 of the communication control device 40₁ determines whether a radio wave usage request is received from a new communication device 20 (a new secondary system) (Step S8c1). If a radio wave usage request is not received (No at Step S8c1), then the second deciding unit 444 repeatedly performs the operation at Step S8c1 until a radio wave usage request is received.

If a radio wave usage request is received (Yes at Step S8c1), then the second deciding unit 444 confirms, based on the held-resource information of the new communication device 20, whether or not the new communication device 20 holds resource blocks (Step S8c2). As explained earlier, the held-resource information is obtained by the obtaining unit 441. The obtaining unit 441 can obtain the held-resource information either from the communication device 20 or from the memory unit 42. If the new communication device 20 is not holding resource blocks (No at Step S8c2), then the second deciding unit 444 grants permission to the new communication device 20 to use the radio waves (Step S8c3).

On the other hand, if the new communication device 20 is holding resource blocks (Yes at Step S8c2), then the second deciding unit 444 determines whether or not that stock is smaller than a reference value corresponding to the priority (Step S8c4). For example, based on the identifier of the business operator of the new communication device 20, the second deciding unit 444 determines the priority corresponding to the new communication device 20. Then, the second deciding unit 444 determines the reference value corresponding to the determined priority (for example, determines the stock of the channels permitted at that priority) as well as determines whether or not the resource block stock of the new communication device 20 is smaller than the determined reference value. If the stock is smaller than the reference value (Yes at Step S8c4), then the second deciding unit 444 grants permission to the new communication device 20 to use the radio waves (Step S8c3). That is, the second deciding unit 444 agrees to additional frequency allocation to the new communication device 20.

On the other hand, if the stock is equal to or greater than the reference value (No at Step S8c4), then the second deciding unit 444 does not grant permission to the new communication device 20 to use the radio waves (Step S8c5).

Once the permission determination for radio wave usage is completed, the second deciding unit 444 ends the permission determination operation.

As a result, radio resources are not allocated to the secondary systems that already have the resource block stock to be equal to or greater than the reference value, thereby enabling maintaining impartiality among the secondary systems. Hence, the radio waves can be used in an efficient manner. Besides, since the reference value corresponds to the priority of the new communication device 20, the radio waves can be used in a more efficient manner in accordance with the priority.

### <<6. Modification examples>>

The embodiment described above is only exemplary, and it is possible to have various modifications and applications.

### <6-1. Termination operation>

As an application example of the present embodiment, it is possible to think of performing a radio wave termination operation of the communication devices 20 based on the resource block stock.

For example, assume a primary system such as a radar that performs operations in an aperiodic manner. In the case of performing secondary use of the radio waves of such a primary system, when the radio waves of the primary system are detected, the communication devices 20 need to terminate the radio wave usage. In such a case, the communication control device 40 makes the communication devices 20 having a large resource block stock terminate the radio wave usage on a priority basis. At that time, the communication control device 40 can also withdraw the allocation of the corresponding frequencies. Alternatively, the communication control device 40 can prohibit radio wave transmission in the units of resource blocks for a predetermined period of time.

For example, in the DPA move list mentioned earlier, the calculation method is such that the communication devices 20 having a large interference amount are stored in the list on a priority basis. However, in the application of the present embodiment, the communication control device 40 can store, in the list on a priority basis, the communication devices 20 having a large resource block stock. Moreover, for example, the communication control device 40 can perform radio wave usage termination on a priority basis starting from the communication device 20 having the largest total interference contribution amount in each resource block.

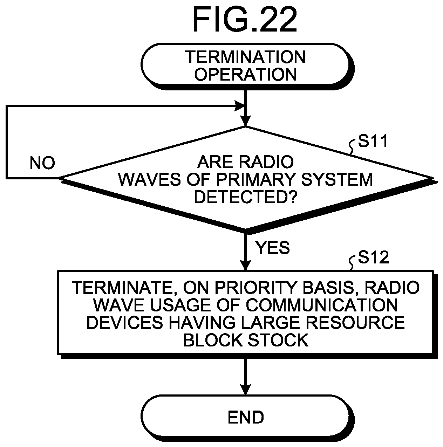

FIG. 22 is a flowchart for explaining an example of the termination operation performed according to the modification example.

Firstly, the detecting unit 446 of the communication control device 40₁ determines whether the radio waves of the primary system are detected (Step S11). If the radio waves of the primary system are not detected (No at Step S11), then the detecting unit 446 repeatedly performs the operation at Step S11 until the radio waves of the primary system are detected.

When the radio waves of the primary system are detected (Yes at Step S11), the notifying unit 445 of the communication control device 40₁ notifies the communication devices 20 (the secondary systems) to terminate the radio wave usage (Step S12). At that time, starting from the communication device 20 having the largest resource block stock, the notifying unit 445 sequentially notifies the communication devices 20 to terminate the radio wave usage, until the protection criteria for the primary system are satisfied.

When the notification is completed, the control unit 44 of the communication control device 40₁ ends the termination operation.

As a result, the radio wave usage is terminated in descending order of the resource block stock, thereby enabling maintaining the impartiality among the communication devices 20. Moreover, since a situation in which only some secondary systems secure a large resource block seldom arises, it becomes possible to use the radio waves in an efficient manner.

### <6-2. Regarding application of embodiment>

In the embodiment described above, when a radio wave request is received from a new communication device 20 in between two instances of periodic operations (i.e., in the period between instances of deciding the operation parameters), the communication control device 40 performs the permission determination operation. However, the permission determination operation is applicable to the periodic operations too. In that case, the radio resources to be distributed to the communication devices 20 need not be the remainder interference margin and can simply be the interference margin. Moreover, a new communication device 20 (a new secondary system) involved in the permission determination operation can simply be the communication device 20 (a secondary system).

### <6-3. Modification example related to system configuration>

The communication control device 40 according to the present embodiment is not limited to the device according to the embodiment described above. Alternatively, for example, the communication control device 40 can be a device that has the functions other than the function of controlling the communication devices which make secondary use of the frequency band in which frequency sharing is performed. For example, the functions of the communication control device 40 according to the present embodiment can be provided in a network manager. In that case, the network manager can be, for example, a C-BBU (Centralized Base Band Unit) having a network configuration called C-RAN (Centralized Radio Access Network) or can be a device including a C-BBU. Still alternatively, the functions of a network manager can be provided in a base station (including an access point). Such a device (such as a network manager) can be treated as a communication control device.

In the embodiment described above, the communication system 1 represents the first-type radio system, and the communication devices 20 represent the second-type radio system. However, the first-type radio system and the second-type radio system are not limited to those examples. Alternatively, for example, the communication devices (for example, the communication devices 10) can represent the first-type radio system, and a communication system (the communication system 2) can represent the second-type radio system. Meanwhile, a radio system mentioned in the embodiment is not limited to be configured from a plurality of devices, and can be appropriately substituted with the term "device" or the term "terminal".

Moreover, in the embodiment described above, although the communication control devices 40 belong to the communication system 2, they need not always belong to the communication system 2. Thus, the communication control devices 40 can be external devices on the outside of the communication system 2. The communication control devices 40 need not directly control the communication devices 20, and can indirectly control them via devices constituting the communication system 2. Moreover, there can be a plurality of secondary systems (the communication systems 2). Thus, each communication control device 40 can manage a plurality of secondary systems. In that case, each secondary system can be treated as a second-type radio system.

Meanwhile, generally, in frequency sharing, the existing system that uses the target band is called the primary system, and system that makes secondary use of the target band is called the secondary system. However, the terms "primary system" and "secondary system" can be substituted with other terms. Thus, a macro cell in the HetNET (Heterogeneous Network) can be treated as the primary system, and a small cell or a relay station in the HetNET can be treated as the secondary system. Alternatively, a base station can be treated as the primary system, and a relay UE or a vehicle UE that is present within the coverage of the base station and that implements D2D or V2X (Vehicle-to-Everything) can be treated as a secondary system. Moreover, a base station is not limited to a fixed type, and can be of portable/mobile type.

Regarding the interface between entities, it does not matter whether the interface is a wired interface or a wireless interface. For example, the interface between entities (the communication control devices, the communication devices, and the terminal devices) according to the present embodiment can be a wireless interface not dependent on frequency sharing. Examples of a wireless interface not dependent on frequency sharing include a wireless interface provided by a mobile communications carrier via a licensed band, and wireless LAN communication that uses the existing bands not requiring a license.

### <6-4. Other modification examples>

A control device that controls the communication device 10, the communication device 20, the terminal device 30, or the communication control device 40 according to the present embodiment can be implemented using a dedicated computer system or a general-purpose computer system.

For example, a communication program meant for performing the operations explained above (for example, the communication control operation, the adjustment operation, and the distribution operation) is stored in a computer-readable recording medium such as an optical disk, a semiconductor memory, a magnetic tape, or a flexible disk. Then, for example, the communication program in installed in a computer, and a control device is configured by performing the abovementioned operations. The control device can be an external device (such as a personal computer) of the communication device 10, the communication device 20, the terminal device 30, or the communication control device 40. Alternatively, the control device can be an internal device of the communication device 10, the communication device 20, the terminal device 30, or the communication control device 40 (for example, the control device can be the control unit 24, the control unit 34, or the control unit 44).

Meanwhile, the communication program can be stored in a disk device of a server device present in a network such as the Internet, and can be made available for downloading in a computer. Alternatively, the abovementioned functions can be implemented as a result of cooperation between the OS (Operating System) and application software. In that case, the portion other than the OS can be distributed by storing it in a medium, or can be stored in a server and made available for downloading in a computer.

Of the operations described in the embodiments, some or all of the operations explained as being performed automatically can be performed manually. Similarly, some or all of the operations explained as being performed manually can be performed automatically by a known method. Moreover, the information such as the operational procedures, the specific names, a variety of data, and the parameters described in the embodiment or illustrated in the drawings can be changed as required unless otherwise specified. For example, the variety of information illustrated in the drawings is not limited to the information illustrated in the drawings.

The constituent elements of the devices illustrated in the drawings are merely conceptual, and need not be physically configured as illustrated. The constituent elements, as a whole or in part, can be separated or integrated either functionally or physically based on various types of loads or use conditions.

The embodiment described above can be appropriately combined without causing any contradiction in the operational details. Moreover, regarding the steps illustrated in the flowcharts and the sequence diagrams explained in the embodiment, the sequence can be appropriately changed.

### <<7. Summary>>

As explained above, according to the embodiment of the application concerned, the communication control device 40 obtains the information related to the holding of the radio resources of a secondary system that performs radio communication using the radio waves of the frequency band used by a primary system. Then, based on the information related to the holding of the radio resources, the communication control device 40 decides about the allocation of the interference margin to the secondary system. That enables maintaining the impartiality among the secondary systems in regard to the allocation of the interference margin. As a result, there is a decrease in the occurrences of disproportionate allocation of the radio resources to particular secondary systems. As a result, fewer secondary systems face the issue of not being able to use the radio resources at all, thereby enabling efficient use of the radio resources.

Although the application concerned is described above in detail in the form of an embodiment with reference to the accompanying drawings; the technical scope of the application concerned is not limited to the embodiment described above. That is, the application concerned is to be construed as embodying all modifications such as other embodiments, additions, alternative constructions, and deletions that may occur to one skilled in the art that fairly fall within the basic teaching herein set forth.

The effects of the embodiment described in the present written description are only explanatory and exemplary, and are not limited in scope.

Meanwhile, a configuration as explained below also falls within the technical scope of the application concerned.
(1) A communication control device comprising:
   an obtaining unit that obtains information related to holding of radio resource by a second-type radio system which performs radio communication using radio waves of frequency band used by a first-type radio system; and
   a deciding unit that, based on the information related to holding of radio resource, makes a decision about allocation of interference margin to the second-type radio system.
(2) The communication device according to (1), wherein the obtaining unit obtains, as the information related to holding of radio resource by the second-type radio system, information related to resource block held by the second-type radio system.
(3) The communication control device according to (2), wherein
   when the second-type radio system is not holding resource block, the deciding unit allocates interference margin to the second-type radio system, and
   when the second-type radio system is holding resource block, the deciding unit does not allocate interference margin to the second-type radio system.
(4) The communication control device according to (2), wherein
   when resource block stock of the second-type radio system is smaller than a predetermined amount, the deciding unit allocates interference margin to the second-type radio system, and
   when resource block stock of the second-type radio system is equal to or greater than the predetermined amount, the deciding unit does not allocate interference margin to the second-type radio system.
(5) The communication control device according to (2), wherein
   when resource block stock of the second-type radio system is smaller than a reference value for priority, the deciding unit allocates interference margin to the second-type radio system, and
   when resource block stock of the second-type radio system is greater than the reference value for priority, the deciding unit does not allocate interference margin to the second-type radio system.
(6) The communication control device according to any one of (2) to (5), wherein, based on information about resource block stock of each of a plurality of the second-type radio system, the deciding unit decides on the second-type radio systems, from among the plurality of second-type radio systems, that are to be forced to terminate radio wave usage when the first-type radio system is using radio waves.
(7) The communication control device according to any one of (2) to (6), wherein elements constituting resource block at least include channel bandwidth.
(8) The communication control device according to any one of (2) to (7), wherein elements constituting resource block at least include magnitude of allowable output power.
(9) The communication control device according to any one of (2) to (8), wherein elements constituting resource block at least include coverage.
(10) The communication control device according to any one of (2) to (9), wherein elements constituting resource block at least include time slot in which output is allowed.
(11) The communication control device according to any one of (2) to (10), further comprising a calculating unit that calculates resource block stock of the second-type radio system, wherein
   the calculating unit
   decides on resource amount per unit of resource block based on information related to the second-type radio system, and
   calculates resource block stock of the second-type radio system based on the decided resource amount, and
   the obtaining unit obtains, as resource block stock of the second-type radio system, resource block stock calculated by the calculating unit.
(12) The communication control device according to any one of (2) to (11), further comprising a memory unit that is used to store resource block stock of each of the plurality of second-type radio systems.
(13) The communication control device according to any one of (1) to (12), wherein
   the deciding unit periodically decides on operation parameter related to radio wave transmission of each of one or more of the second-type radio system which performs radio communication using radio waves of frequency band used by one or more of the first-type radio system, and
   when a radio wave usage request is received from a new second-type radio system in period between instances of deciding the operation parameter, based on the information related to holding of radio resource, the deciding unit makes a decision about allocation of remainder interference margin to the second-type radio system.
(14) A communication control method comprising:
   obtaining information related to holding of radio resource by a second-type radio system which performs radio communication using radio waves of frequency band used by a first-type radio system; and
   deciding that, based on the information related to holding of radio resource, includes taking decision about allocation of interference margin to the second-type radio system.
(15) A communication device comprising a transmitting unit that sends information related to radio resource held therein to a communication control device which includes
   an obtaining unit that obtains information related to holding of radio resource by a communication device that performs radio communication using radio waves in frequency band used by a first-type radio system, and
   a deciding unit that, based on the information related to holding of radio resource, makes a decision about allocation of interference margin to the communication device.
(16) A communication control program that makes a computer included in a communication control device function as:
   an obtaining unit that obtains information related to holding of radio resource by a second-type radio system which performs radio communication using radio waves of frequency band used by a first-type radio system; and
   a deciding unit that, based on the information related to holding of radio resource, makes a decision about allocation of interference margin to the second-type radio system.
(17) A communication system including:
   a second-type radio system that performs radio communication using radio waves of frequency band used by a first-type radio system; and
   a communication control device that controls the second-type radio system, wherein
   the communication device includes
   an obtaining unit that obtains information related to holding of radio resource by a second-type radio system which performs radio communication using radio waves of frequency band used by a first-type radio system, and
   a deciding unit that, based on the information related to holding of radio resource, makes a decision about allocation of interference margin to the second-type radio system.
(18) The communication system according to (17), wherein
   the second-type radio system includes a transmitting unit that sends information related to holding of radio resource held therein, and
   the obtaining unit obtains the information related to holding of radio resource as sent by the transmitting unit.

### Reference Signs List

- 1, 2: communication system

- 10, 20: communication device
- 30: terminal device
- 40: communication control device
- 21, 31, 41: radio communication unit
- 22, 32, 42: memory unit
- 23, 33, 43: network communication unit
- 24, 34, 44: control unit
- 211, 311: reception processing unit
- 212, 312: transmission processing unit
- 241: receiving unit
- 242: transmitting unit
- 441: obtaining unit
- 442: first deciding unit
- 443: registering unit
- 444: second deciding unit
- 445: notifying unit
- 446: detecting unit
- 447: calculating unit

## Claims

1. A communication control device comprising:
an obtaining unit that obtains information related to holding of radio resource by a second-type radio system which performs radio communication using radio waves of frequency band used by a first-type radio system; and
a deciding unit that, based on the information related to holding of radio resource, makes a decision about allocation of interference margin to the second-type radio system.

2. The communication device according to claim 1, wherein the obtaining unit obtains, as the information related to holding of radio resource by the second-type radio system, information related to resource block held by the second-type radio system.

3. The communication control device according to claim 2, wherein
when the second-type radio system is not holding resource block, the deciding unit allocates interference margin to the second-type radio system, and
when the second-type radio system is holding resource block, the deciding unit does not allocate interference margin to the second-type radio system.

4. The communication control device according to claim 2, wherein
when resource block stock of the second-type radio system is smaller than a predetermined amount, the deciding unit allocates interference margin to the second-type radio system, and
when resource block stock of the second-type radio system is equal to or greater than the predetermined amount, the deciding unit does not allocate interference margin to the second-type radio system.

5. The communication control device according to claim 2, wherein
when resource block stock of the second-type radio system is smaller than a reference value for priority, the deciding unit allocates interference margin to the second-type radio system, and
when resource block stock of the second-type radio system is greater than the reference value for priority, the deciding unit does not allocate interference margin to the second-type radio system.

6. The communication control device according to claim 2, wherein, based on information about resource block stock of each of a plurality of the second-type radio system, the deciding unit decides on the second-type radio systems, from among the plurality of second-type radio systems, that are to be forced to terminate radio wave usage when the first-type radio system is using radio waves.

7. The communication control device according to claim 2, wherein elements constituting resource block at least include channel bandwidth.

8. The communication control device according to claim 2, wherein elements constituting resource block at least include magnitude of allowable output power.

9. The communication control device according to claim 2, wherein elements constituting resource block at least include coverage.

10. The communication control device according to claim 2, wherein elements constituting resource block at least include time slot in which output is allowed.

11. The communication control device according to claim 2, further comprising a calculating unit that calculates resource block stock of the second-type radio system, wherein
the calculating unit
decides on resource amount per unit of resource block based on information related to the second-type radio system, and
calculates resource block stock of the second-type radio system based on the decided resource amount, and
the obtaining unit obtains, as resource block stock of the second-type radio system, resource block stock calculated by the calculating unit.

12. The communication control device according to claim 2, further comprising a memory unit that is used to store resource block stock of each of the plurality of second-type radio systems.

13. The communication control device according to claim 1, wherein
the deciding unit periodically decides on operation parameter related to radio wave transmission of each of one or more of the second-type radio system which performs radio communication using radio waves of frequency band used by one or more of the first-type radio system, and
when a radio wave usage request is received from a new second-type radio system in period between instances of deciding the operation parameter, based on the information related to holding of radio resource, the deciding unit makes a decision about allocation of remainder interference margin to the second-type radio system.

14. A communication control method comprising:
obtaining information related to holding of radio resource by a second-type radio system which performs radio communication using radio waves of frequency band used by a first-type radio system; and
deciding that, based on the information related to holding of radio resource, includes taking decision about allocation of interference margin to the second-type radio system.

15. A communication device comprising a transmitting unit that sends information related to radio resource held therein to a communication control device which includes
an obtaining unit that obtains information related to holding of radio resource by a communication device that performs radio communication using radio waves in frequency band used by a first-type radio system, and
a deciding unit that, based on the information related to holding of radio resource, makes a decision about allocation of interference margin to the communication device.
